# EUROPEAN PATENT APPLICATION

(11) **EP 4 354 935 A1**
(43) Date of publication of application: **17.04.2024**
(21) Application number: 22819409.8
(22) Date of filing: 31.05.2022
(51) Int. Cl.: H04W 24/02, H04W 76/00

(54) **DATA TRANSMISSION METHOD AND APPARATUS, AND STORAGE MEDIUM**

(30) Priority: 07.06.2021 CN 202110632968
(71) Applicant: ZTE Corporation, Shenzhen, Guangdong 518057 (CN)
(72) Inventor: CHEN, Lin, Shenzhen, Guangdong 518057 (CN); WANG, Mengzhen, Shenzhen, Guangdong 518057 (CN); LUO, Wei, Shenzhen, Guangdong 518057 (CN); HUANG, Ying, Shenzhen, Guangdong 518057 (CN)
(74) Representative: Aipex B.V.
(86) International application number: PCT/CN2022/096172
(87) International publication number: WO 2022/257811

(57) **Abstract**

Provided are a data transmission method and apparatus, and a storage medium. The data transmission method includes receiving, by first UE, bearer configuration information sent by a serving node; and performing, by the first UE, bearer configuration.

## Description

This application claims priority to Chinese Patent Application No. 202110632968.6 filed with the China National Intellectual Property Administration (CNIPA) on Jun. 7, 2021, the disclosure of which is incorporated herein by reference in its entirety.

### TECHNICAL FIELD

The present application relates to the field of mobile communication technology, for example, a data transmission method and apparatus, and a storage medium.

### BACKGROUND

With the development of wireless multimedia services, people's demand for high data rates and better user experience is increasing, thus putting high requirements for system capacity and coverage of traditional cellular networks. In application scenarios such as public safety, social networks, close-range data sharing, and local advertising, the demand for understanding and communicating with people or things nearby is increased. This communication method may be called proximity services. Traditional base station-centered cellular networks have significant limitations in supporting high data rates and proximity services. Under this background, device-to-device (D2D) technology has emerged. D2D technology, also known as a sidelink, may reduce the burden of cellular networks, reduce the battery power consumption of user equipment, increase a data rate, and improve the robustness of network infrastructure, which satisfies the requirements for high data-rate services and proximity services.

In another aspect, more and more mobile production devices, such as sensors, cameras, controllers, which have powerful wireless communication functions and support localized services, are widely deployed in the factories of the future. These sensors, cameras, and controllers need to communicate with each other. In production factories, it is also possible to use high-precision automated robots or machine vision devices for quality detection and control, which requires high-throughput, low-latency, and time-determined communication between them. Compared with wired connections, wireless connections may support flexible deployment and rapid configuration updates to improve productivity. In addition, with the rise of the mobile Internet of Things, a large number of devices supporting wireless access are introduced into an office environment, such as a printer, a scanner, a telephone, and a computer. As these devices are deployed in large numbers, large-scale local wireless connections may be supported in an enterprise. In addition, a large enterprise may have multiple office locations. 5th-generation (5G) local-area network services may be provided in office locations, and employees in different office locations may also communicate with each other.

Communication in an industrial park or enterprise usually requires data not to leave the park. These data usually involves the secrets of the enterprise and requires avoidance of disclosure. Then it is necessary to perform sidelink communication between these devices or forward the data transmission between them through minimal network facilities. At present, for short and medium communication distance requirements of a large amount of internal data, how to support effective data transmission and satisfy the demand of data not leaving a park is an urgent problem to be solved.

### SUMMARY

The present application provides a data transmission method and apparatus, and a storage medium for performing data transmission between UE, improving data transmission efficiency, and reducing data transmission latency.

In a first aspect, an embodiment of the present application provides a data transmission method. The method includes receiving, by first UE, bearer configuration information sent by a serving node; and performing, by the first UE, bearer configuration.

In a second aspect, an embodiment of the present application provides a data transmission method. The device includes sending, by a first base station, an SL data forwarding request to a second base station; and receiving, by the first base station, the SL data forwarding response sent by the second base station.

In a third aspect, an embodiment of the present application provides a data transmission method. The device includes receiving, by a DU, the bearer configuration request information sent by a CU; and sending, by the DU, bearer configuration response information to the CU.

In a fourth aspect, an embodiment of the present application provides a data transmission method. The device includes sending, by a first DU, a data forwarding request to a second DU; and receiving, by the first DU, the data forwarding response sent by the second DU.

In a fifth aspect, an embodiment of the present application provides a data transmission method. The device includes receiving, by a first IAB node, the bearer configuration information sent by the CU; and sending, by the first IAB node, bearer configuration response information to the CU.

In a sixth aspect, an embodiment of the present application provides UE. The UE includes a receiving module and a configuration module. The receiving module is configured to receive the bearer configuration information sent by the serving node. The configuration module is configured to perform bearer configuration.

In a seventh aspect, an embodiment of the present application provides a base station. The base station includes a sending module and a receiving module. The sending module is configured to send the sidelink (SL) data forwarding request to the second base station. The receiving module is configured to receive the SL data forwarding response sent by the second base station.

In an eighth aspect, an embodiment of the present application provides a DU. The DU includes a receiving module and a sending module. The receiving module is configured to receive the bearer configuration request information sent by the centralized unit (CU). The sending module is configured to send the bearer configuration response information to the CU.

In a ninth aspect, an embodiment of the present application provides a DU. The DU includes a sending module and a receiving module. The sending module is configured to send the data forwarding request to the second DU. The receiving module is configured to receive the data forwarding response sent by the second DU.

In a tenth aspect, an embodiment of the present application provides an IAB node. The IAB node includes a receiving module and a sending module. The receiving module is configured to receive the bearer configuration information sent by the centralized unit (CU). The sending module is configured to send the bearer configuration response information to the CU.

In an eleventh aspect, an embodiment of the present application provides a storage medium including computer-executable instructions. When executing the computer-executable instructions, a computer processor is configured to perform the data transmission method described in any possible implementation of the first aspect to the fifth aspect.

### BRIEF DESCRIPTION OF DRAWINGS

FIG. 1 is a diagram of the application scenario of device-to-device technology.
FIG. 2 is a diagram of an internal communication scenario of an enterprise.
FIG. 3 is a diagram of an internal communication scenario of a plant.
FIG. 4 is a diagram of data forwarding between UE.
FIG. 5 is a flowchart of a data transmission method according to an embodiment of the present application.
FIG. 6 is a flowchart of another data transmission method according to an embodiment of the present application.
FIG. 7 is a flowchart of another data transmission method according to an embodiment of the present application.
FIG. 8 is a flowchart of another data transmission method according to an embodiment of the present application.
FIG. 9 is a flowchart of another data transmission method according to an embodiment of the present application.
FIG. 10 is a diagram of the application scenario of a data transmission method according to embodiment one of the present application.
FIGS. 11A and 11B are diagrams of user plane and control plane protocol stacks in which a base station forwards data between UE 1 and UE 2.
FIG. 12 is a diagram of the application scenario of a data transmission method according to embodiment two of the present application.
FIGS. 13A and 13B are diagrams of user plane and control plane protocol stacks in which a base station 1 and a base station 2 forward data between UE 1 and UE 2.
FIG. 14 is a diagram of the application scenario of a data transmission method according to embodiment three of the present application.
FIGS. 15A and 15B are diagrams of user plane and control plane protocol stacks in which a DU 1 forwards data between UE 1 and UE 2.
FIG. 16 is a diagram of the application scenario of a data transmission method according to embodiment four of the present application.
FIGS. 17A and 17B are diagrams of user plane and control plane protocol stacks in which a DU 1 and a DU 2 forward data between UE 1 and UE 2.
FIG. 18 is a diagram of the application scenario of a data transmission method according to embodiment five of the present application.
FIGS. 19A and 19B are diagrams of the application scenarios of a data transmission method according to embodiment six of the present application.
FIG. 20 is a diagram of a user plane protocol stack in which an IAB node 2, a donor DU 1, and an IAB node 3 forward data between UE 1 and UE 2.
FIG. 21 is a diagram of the application scenario of a data transmission method according to embodiment seven of the present application.
FIG. 22 is a diagram of a user plane protocol stack in which an IAB node 3, a donor DU 1, a donor DU 2, and an IAB node 4 forward data for UE 1 and UE 2.
FIG. 23 is a diagram of a user plane protocol stack in which an IAB node 3, a donor DU 1, a CU 1, a donor DU 2, and an IAB node 4 forward the data packet between UE 1 and UE 2.

### DETAILED DESCRIPTION

Embodiments of the present application are described hereinafter in detail with reference to the drawings.

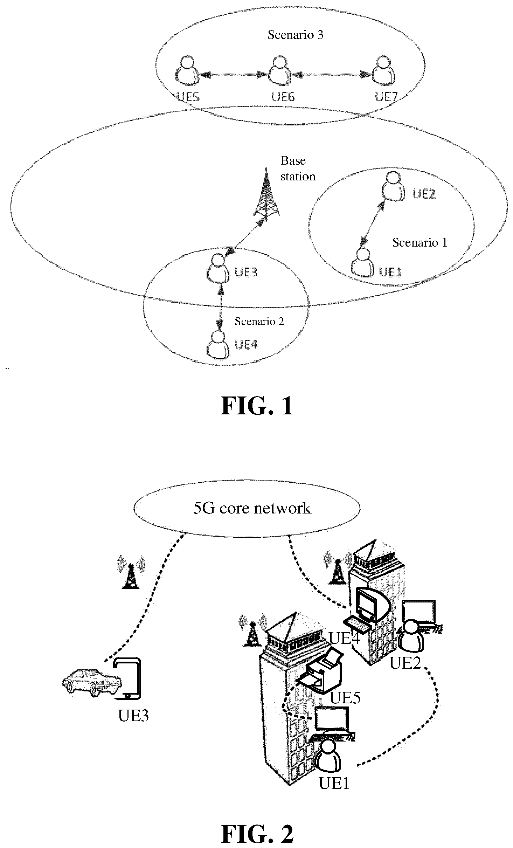

Device-to-device technology may work in authorized frequency bands or unauthorized frequency bands, allowing multiple user equipment for supporting device-to-device functions, that is, D2D user equipment (D2D UE), to perform direct discovery/direct communication in a case with network infrastructure or in a case without network infrastructure. As shown in FIG. 1, there are three main application scenarios for device-to-device. FIG. 1 is a diagram of the application scenario of device-to-device technology.
1) User equipment (UE) 1 and UE 2 perform data interaction under the coverage of a cellular network, and user plane data does not pass through network infrastructure, as shown in the scenario 1 in FIG. 1.
2) UE relay transmission in partial coverage regions, such as the scenario 2 in FIG. 1, is also referred to as a UE-to-network relay scenario. UE 3 may communicate with a network side by using the existing long term evolution (LTE) method. At the same time, the data of UE 4 without network coverage may also be forwarded to a base station through a D2D method. The UE 4 is referred to as remote UE. The UE 3 is referred to as relay UE.
3) In the case where the cellular network cannot operate properly, the relay communication between UE is allowed. For example, the scenario 3 in FIG. 1 is also referred to as a UE-to-UE relay scenario. UE 6 may forward a data packet between UE 5 and UE 7. The UE 6 is referred to as relay UE. The UE 5 and UE7 are referred to as remote UE.

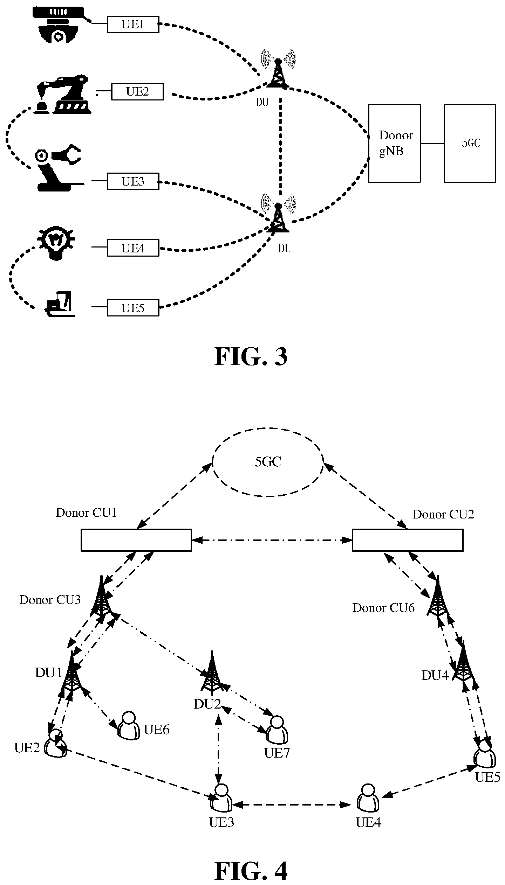

Communication in an industrial park or enterprise usually requires data not to leave the park, that is, sidelink communication is performed between these devices, or the data transmission between them is forwarded through minimal network facilities. FIG. 2 is a diagram of an internal communication scenario of an enterprise. As shown in FIG. 2, device-to-device communication may be performed between the UE 1 and the UE 5. The UE 1 may also have a conference call with the UE 2 in another office building in an office region. The communication between them may be routed and forwarded through the base station installed in the office region of the enterprise without passing through a 5G core network (5GC). Similarly, the sensors, brakes, and controllers in an industrial park may be forwarded through device-to-device communication or limited network facilities, as shown in FIG. 3. FIG. 3 is a diagram of an internal communication scenario of a plant. A donor next generation node B (gNB) is donor gNB.

Table 1 shows possible wireless communication use cases and corresponding communication range requirements in an office region and a plant. As can be seen from Table 1, there are a large number of medium and short communication range requirements in the office region and the plant. How to support effective data transmission and satisfy the demand of data not leaving a park requires further research and specific solutions.

**Table 1**

| Scenario | Application Scenario | Range |
|---|---|---|
| Office/Enterprise | communicate (data) with scanners, projectors, printers, and television's screens | short range |
| | conference calls (voice calls) between employees | short or medium range |
| | instant communication messages (data) between employees | short or medium range |
| | file sharing (data) | short or medium range |
| | multimedia stream | short or medium range |
| Plant | automated control and interconnection between sensors, actuators, and controllers | short or medium range |
| | | short or medium range |
| | self-driving car | short or medium range |

As shown in table 1, in the office and plant, there are various different short-range and medium-range communication scenarios between user equipment. Some user equipment may communicate with each other through sidelinks. Some user equipment may communicate through multi-hop sidelinks. Some user equipment may access networks through UE-to-network relay nodes and then perform data interaction through a core network. Some user equipment may transmit data to the core network through one or more hops of base station distribution units for data interaction.

To implement the goal of not leaving the park, the embodiments of the present application consider that the data transmission between the user equipment in the office region or the industrial park is limited in the base station in the park for forwarding, and there is no need to transmit the data to the core network and an application server. FIG. 4 is a diagram of data forwarding between UE. As shown in FIG. 4, for data transmission between the UE 2 and the UE 5, a conventional transmission path 1 is UE 2 - > DU 1 - > donor DU 3 - > donor CU 1 - > 5GC - > donor CU 2 - > donor DU 6 - > DU 4 - > UE 5. To ensure local transmission, it is also possible to consider a transmission path 2 for relaying by multiple user equipment, that is, UE 2 - > UE 3 - > UE 4 - > UE 5. In addition, it is also possible to consider a data forwarding path 3 between the two CUs in the industrial park, that is, UE 2 - > DU 1 -> donor DU 3 -> donor CU 1 - > donor CU 2 - > donor DU 6 - > DU 4 - > UE 5. The communication between the UE 3 and UE 7 may be implemented by simple DU forwarding through a path 4, that is, UE 3 - > DU 2 -> UE 7. For the communication between the UE 6 and UE 7, it is possible to forward through multiple DUs, that is, through a path 5, that is, UE 6 - > DU 1 - > donor DU 3 - > DU 2 - > UE 7.

Specifically, there may be several types of local transmission paths of the user equipment below to replace traditional transmission paths passing through the core network. The specific path used for data transmission between the user equipment in the enterprise or industrial park may be comprehensively decided according to the position of the user equipment, network loads, channel conditions, and network deployment.
Path 1: single-hop or multi-hop user equipment to user equipment relay.
Path 2: a data relay across a centralized unit (CU).
Path 3: a data relay in the same distributed unit (DU).
Path 4: a data relay across the DUs in the same CU.

To ensure the security of the user data transmission in the industrial park, the locally forwarded data packet may be securely encrypted using the secret key negotiated between user equipment. In this manner, no matter how many DUs/CUs the data passes through, the data does not need to be encrypted and decrypted between these DUs and/or CUs, and the data is not visible to the DUs or CUs passing halfway, thereby ensuring the security.

In addition, in the case where the sidelink resource of the equipment is insufficient, a DU or CU may forward the data between user equipment by a Uu interface resource. Thus, the problem of tight sidelink resource of the equipment is alleviated. Considering that a base station may support stronger coverage and multi-antenna capabilities, the data forwarding between the user equipment is performed by the DU/CU of the base station, so that the communication transmission range between the user equipment can be greatly expanded, and the data transmission rate is improved. Compared with a traditional data transmission path passing through the core network, the data transmission latency may also be reduced.

To implement flexible data local transmission between user equipment, in the embodiments of the present application, for traditional base station architecture, CU-DU separation architecture, and integrated access and backhaul (IAB) architecture, the forwarding path, protocol stack, and corresponding signaling configuration of the data between equipment are designed, and solutions are provided.

At present, the short-range communication corresponding to device-to-device communication may be applied to intelligent automobiles, intelligent terminals, intelligent homes, and intelligent manufacturing fields. In these short-range communication systems, the nodes in the system are divided into a management node (G node) and a managed node (T node). In a specific application scenario, a single G node manages a certain number of T nodes. The G node is connected to these T nodes to jointly complete specific communication functions. The single G node and the T nodes connected to it jointly form a communication domain. An intelligent automobile scenario is used as an example. A cockpit domain controller (CDC) may be used as a G node, and various on-board devices (such as a microphone and a speaker) may be used as T nodes to jointly complete a cockpit entertainment function. At this time, the CDC and the on-board devices form a communication domain. When a mobile phone is connected to the CDC, the mobile phone may also serve as a T node in the communication domain. In an intelligent automobile environment, a mobile phone may also be used as a G node to connect to a wearable device. At this time, the mobile phone and the wearable device form another communication domain. In an intelligent home scenario, a TV and an audio device hung below form a communication domain. A mobile phone and headphones form another communication domain. The two communication domains may be distinguished by a high-level/general communication domain, and the high-level communication domain coordinates resources to implement coordinated coexistence between multiple domains.

In the present application, UE may correspond to the T node in the preceding scenarios, and a serving node may correspond to the G node in the preceding scenarios. In the present application, the mentioned mechanisms for the service node to forward short-range communication data for the UE, such as bearer configuration, path configuration, and data transmission, may be applied to a G node for forwarding the communication data between T nodes for the T nodes. The serving node may include any combination of the following nodes: a base station, a CU, a DU, an IAB node, an IAB node DU, and a donor DU.

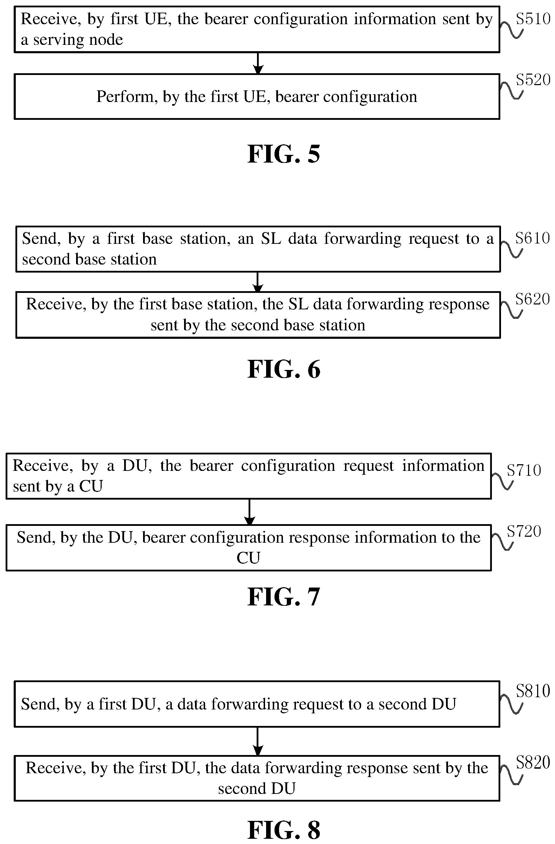

FIG. 5 is a flowchart of a data transmission method according to an embodiment of the present application. As shown in FIG. 5, the data transmission method provided by this embodiment includes the following.

In step S510, first UE receives the bearer configuration information sent by the serving node.

In step S520, the first UE performs bearer configuration.

In an embodiment, the bearer configuration information includes at least one of the following: Uu RLC channel configuration, a Uu RLC channel identifier, Uu logical channel configuration, a source UE identifier, a target UE identifier, a peer UE identifier, service data adaptation protocol (SDAP) configuration corresponding to a sidelink radio bearer (SL RB), packet data convergence protocol (PDCP) configuration corresponding to the SL RB, or mapping information between the SL RB and a Uu RLC channel.

In an embodiment, the bearer configuration information includes at least one of the following: SDAP configuration corresponding to an SL RB, PDCP configuration corresponding to the SL RB, PC5 RLC channel configuration corresponding to the SL RB, PC5 logical channel configuration corresponding to the SL RB, a source UE identifier, a target UE identifier, or a peer UE identifier.

In an embodiment, the mapping information between the SL RB and the Uu RLC channel includes at least one of the following information: mapping of an SL RB identifier and/or the source UE identifier and/or the target UE identifier to the Uu RLC channel identifier or a Uu logical channel identifier, or mapping of a PC5 quality of service flow identifier (PFI) to the Uu RLC channel identifier or the Uu logical channel identifier.

In an embodiment, after the first UE performs bearer configuration, the method includes sending, by the first UE, data to second UE according to the configured bearer.

The first UE sends the data to the second UE in the following manners according to the configured bearer: The first UE maps the SL RB data corresponding to the second UE to a Uu interface RLC channel and sends the SL RB data to the serving node; or the first UE delivers the SL RB data corresponding to the second UE to a PC5 RLC channel and sends the SL RB data through a PC5 interface.

In an embodiment, the data transmission method also includes the following: The SL RB data sent by the first UE to the serving node encapsulates an adaptation layer subheader, and the adaptation layer subheader includes any combination of the following information: a source UE identifier, a target UE identifier, and an SL RB ID; and the source UE identifier and/or the target UE identifier included in the adaptation layer subheader includes any one of the following identifiers: a cell radio network temporary identifier (C-RNTI), a SAE temporary mobile station identifier (S-TMSI), a layer 2 (L2) destination identifier (ID), a UE identifier assigned by the serving node to the UE, or an identifier assigned by a core network to the UE.

In an embodiment, after the first UE receives the bearer configuration information sent by the serving node, the method also includes sending, by the first UE, at least one of the following information to the serving node: a request or indication for the serving node forwarding SL data or signaling, a source UE identifier, a target UE identifier, a serving node identifier of source UE, a serving node identifier of target UE, a serving cell identifier of the source UE, a serving cell identifier of the target UE, a source UE identifier, a target UE identifier, or quality of service (QoS) flow information. The QoS flow information includes at least one of the following: a PC5 quality of service flow identifier (PFI) or a QoS parameter.

In an embodiment, the serving node includes any combination of the following nodes: a base station, a CU, a DU, an IAB node, an IAB node DU, and a donor DU.

FIG. 6 is a flowchart of another data transmission method according to an embodiment of the present application. As shown in FIG. 6, the data transmission method provided by this embodiment includes the following.

In step S610, a first base station sends an SL data forwarding request to a second base station.

In step S620, the first base station receives the SL data forwarding response sent by the second base station.

In an embodiment, after the first base station receives the SL data forwarding response sent by the second base station, the method also includes receiving, by the first base station, the SL data sent by the first UE and sending the SL data to the second base station through an SL data forwarding tunnel.

In an embodiment, the SL data forwarding request includes at least one of the following information: an SL sending request, an SL receiving request, SL forwarding user plane transport layer information, QoS information, an SLRB ID, a PC5-signaling (PC5-S), PC5-radio resource control (PC5-RRC), a PC5-discovery message (PC5-D), a source UE identifier, a target UE identifier or a target group identifier or a target broadcast identifier, or a unicast or multicast or broadcast indication.

In an embodiment, the SL data forwarding response includes at least one of the following information: SL forwarding user plane transport layer information, an SL RB ID, a received quality of service flow identifier (QFI), PC5-S, PC5-RRC, PC5-D, a source UE identifier, or a target UE identifier or a target group identifier or a target broadcast identifier.

In an embodiment, the SL forwarding user plane transport layer information includes general packet radio service (GPRS) tunneling protocol (GTP)-tunnel information. The GTP-tunnel information includes a transport layer address and GPRS tunneling protocol (GTP)-tunnel endpoint identifier (TEID) information.

In an embodiment, the QoS information includes any combination of the following information: a PQI, an RLC mode, the QoS parameter of an SL RB, a QoS flow identifier mapped to the SL RB, and the QoS parameter of a QoS flow.

In an embodiment, when the SL data forwarding tunnel corresponds to a specific sidelink radio bearer, an SL RB ID corresponds to a piece of SL forwarding user plane transport layer information in SL forwarding request and response messages.

Alternatively, when the SL data forwarding tunnel corresponds to specific UE, each of a source UE identifier and a target UE identifier corresponds to a piece of SL forwarding user plane transport layer information in the SL forwarding request and response messages.

Alternatively, when the SL data forwarding tunnel corresponds to a broadcast or multicast, a target group identifier or a target broadcast identifier corresponds to a piece of SL forwarding user plane transport layer information in SL forwarding request and response messages.

Alternatively, when the SL data forwarding tunnel corresponds to one of non-UE specific GTP-U tunnels corresponding to different types of PC5 signaling, a type of PC5-S or PC5-RRC or PC5-D corresponds to a piece of SL forwarding user plane transport layer information in SL forwarding request and response messages.

In an embodiment, after the first base station receives the SL data sent by the first UE, the method includes the following.

After the first base station encapsulates a GTP-U subheader, a user datagram protocol (UDP) subheader or an Internet protocol (IP) subheader into a protocol data unit (PDU), the SL data is sent to the second base station through a data forwarding tunnel.

FIG. 7 is a flowchart of another data transmission method according to an embodiment of the present application. As shown in FIG. 7, the data transmission method provided by this embodiment includes the following.

In step S710, a DU receives the bearer configuration request information sent by a CU.

In step S720, the DU sends bearer configuration response information to the CU.

In an embodiment, the DU sends the bearer configuration response information to the CU, and the method also includes receiving, by the DU, the data sent by the first UE and forwarding the data to the second UE.

In an embodiment, bearer configuration information includes at least one of the following information: a Uu RLC channel configuration establishment/modification/release request, a Uu RLC channel identifier, a source UE identifier, a target UE identifier, a peer UE identifier, an RLC mode, the quality of service (QoS) configuration of a Uu RLC channel, the QoS configuration of an SL RB mapped to a Uu interface RLC channel, the QoS configuration of a QoS flow mapped to the Uu RLC channel, an associated SL RB identifier, a priority, a control signaling type, F1-U tunnel user plane transport layer information, or L-U tunnel configuration information.

In an embodiment, the method also includes receiving, by the DU, Uu interface RLC channel mapping configuration from the CU. The Uu interface RLC channel mapping configuration includes any combination of the following information: a first UE identifier, a first Uu interface RLC channel identifier, a second UE identifier, and a second Uu interface RLC channel identifier. The first UE identifier or the second UE identifier includes at least one of the following: a CU UE F1AP ID, a DU UE F1AP ID, a C-RNTI, an L2 ID, or a UE identifier assigned by the CU.

In an embodiment, the bearer configuration response sent by the DU to the CU also includes at least one of the following information: a successfully configured Uu interface RLC channel list, F1-U tunnel user plane transport layer information, a Uu interface RLC channel list that fails to configure and/or a failure reason, or L-U tunnel configuration information. The successfully configured Uu interface RLC channel list includes RLC, a logical channel and/or MAC configuration.

In an embodiment, the DU sends the data to the second UE in the manners below.

In response to a data packet not including an adaptation layer subheader, the DU determines whether mapping information corresponding to the Uu RLC channel of the first UE exists according to the Uu RLC channel information corresponding to the data packet and the Uu RLC channel mapping configuration received by the DU from the CU. If the mapping information exists, the data packet is mapped and delivered to a corresponding Uu RLC channel of the second UE.

Alternatively, in response to the data packet not including an adaptation layer subheader, the DU finds an SL RB ID, a source UE identifier, and a target UE identifier corresponding to a Uu RLC channel according to the Uu RLC channel information corresponding to the data packet, and the DU determines whether the target UE identifier corresponds to the UE served by the DU. If the target UE identifier corresponds to the UE, the DU searches for a Uu RLC channel corresponding to target UE. If it can be found that the Uu RLC channel is associated with an SL RB between the same pair of a first UE node and a second UE node, the DU maps and delivers the data packet to a corresponding Uu RLC channel of the second UE.

Alternatively, in response to the data packet including an adaptation layer subheader, the DU detects the adaptation layer subheader in the data packet and determines whether a target UE identifier corresponds to UE served by the DU. If the target UE identifier does not correspond to the UE, the DU sends the data packet to the CU. If the target UE identifier corresponds to the UE, the DU finds a Uu RLC channel of the second UE according to SL RB ID information, source UE identifier information and/or target UE identifier information included in the adaptation layer subheader, and the bearer mapping information and delivers the data packet of the data to the corresponding Uu RLC channel.

In an embodiment, the DU sends the data to the second UE in the manners below.

If in the data packet, L-U tunnel configuration information refers to user plane tunnel configuration information between a DU and a DU and includes at least one of the following: user plane transport layer information of a user plane tunnel, one or more associated Uu interface RLC protocol channel identifiers, one or more associated SL RB IDs, a source UE identifier and/or a target UE identifier, QoS configuration of the user plane tunnel or an SL RB or a quality of service (QoS) flow, a priority, or a control signaling type.

FIG. 8 is a flowchart of another data transmission method according to an embodiment of the present application. As shown in FIG. 8, the data transmission method provided by this embodiment includes the following.

In step S810, a first DU sends a data forwarding request to a second DU.

In step S820, the first DU receives the data forwarding response sent by the second DU.

In an embodiment, the first DU receives the data forwarding response sent by the second DU, and the method also includes the manners below.

The first DU receives the data sent by the first UE and forwards the data through the L interface user plane tunnel established between the first DU and the second DU.

In an embodiment, the L interface established between the first DU and the second DU includes an interface between a DU and a DU, or an interface between a donor DU and a DU, or an interface between a donor DU and a donor DU.

In an embodiment, the data forwarding request includes at least one of the following information: cell information of the first DU or tunnel configuration information.

The cell information of the first DU includes at least one of the following information: an NR cell global identifier (NCGI) of a cell of the first DU, a physical cell identifier (PCI), or a public land mobile network (PLMN).

The tunnel configuration information includes at least one of the following information: user plane transport layer information of an L interface user plane tunnel, one or more associated Uu radio link control (RLC) channel identifiers, one or more associated sidelink radio bearer identifiers (SL RB IDs), source UE identifiers, and/or target UE identifiers, QoS configuration of the L interface user plane tunnel or a Uu interface RLC channel or an SL RB or a quality of service (QoS) flow, a priority, or a control signaling type.

In an embodiment, the data forwarding response includes cell information of the second DU. The cell information of the second DU includes an NCGI of a cell of the second DU, a PCI, a PLMN, and tunnel configuration information. The tunnel configuration information includes at least one of the following information: user plane transport layer information of an L interface user plane tunnel, one or more associated Uu radio link control (RLC) channel identifiers, one or more associated sidelink radio bearer identifiers (SL RB IDs), source UE identifiers, and/or target UE identifiers, QoS configuration of the L interface user plane tunnel or a Uu interface RLC channel or an SL RB or a quality of service (QoS) flow, a priority, or a control signaling type.

In an embodiment, the method also includes receiving, by the first DU, the routing and bearer mapping configuration information sent by a first CU. The routing and the bearer mapping configuration information include at least one of the following: an SL RB ID, a source UE identifier, a target UE identifier, next hop information, or egress tunnel information. The next hop information includes at least one of the following: an identifier of a CU, an identifier of a DU, or a UE identifier. The egress tunnel information includes at least one of the following: an identifier of a CU and/or F1 interface user plane tunnel information, an identifier of a DU and/or L interface user plane tunnel information, or a UE identifier and/or Uu interface RLC channel information.

In an embodiment, before the first DU sends the data forwarding request to the second DU, the method also includes receiving, by the first DU, the IP address information of the second DU sent by the first CU.

In an embodiment, the first DU receives the data sent by the first UE and forwards the data through the L interface user plane tunnel established between the first DU and the second DU in the following manners: After the first DU receives the data, the first DU checks SL RB ID information associated with a Uu RLC channel included in an adaptation layer, source UE identifier information, and target UE identifier information and routing and bearer mapping information configured by a CU and finds bearer information and a node corresponding to the next hop; and in response to the next hop corresponding to the data being an identifier of the second DU, the first DU maps a data packet to the L interface user plane tunnel corresponding to the first DU and the second DU and sends the data packet to the second DU.

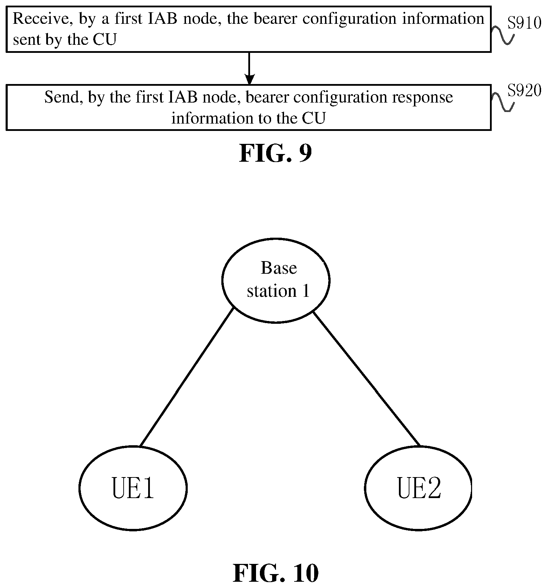

FIG. 9 is a flowchart of another data transmission method according to an embodiment of the present application. As shown in FIG. 9, the data transmission method provided by this embodiment includes the following.

In step S910, a first IAB node receives the bearer configuration information sent by the CU.

In step S920, the first IAB node sends bearer configuration response information to the CU.

After the first IAB node performs bearer configuration, the method also includes the following.

The first IAB node receives the data sent by the first UE and forwards the data through the configured bearer.

In an embodiment, the step that the first IAB node sends the bearer configuration response information to the CU includes: The first IAB node sends a successfully configured backhaul (RLC) RLC tunnel list, a BH RLC tunnel list that fails to configure, and/or a failure reason to the CU.

In an embodiment, bearer configuration information includes at least one of the following information: one or more associated Uu interface RLC protocol channel identifiers, one or more associated SL RB IDs, a source UE identifier and/or a target UE identifier, QoS configuration of a Uu interface RLC channel or an SL RB or a quality of service (QoS) flow, a priority, or a control signaling type.

In an embodiment, the bearer configuration information also includes routing selection and bearer mapping configuration information. The routing and the bearer mapping configuration information include at least one of the following: an SL RB ID, a source UE identifier, a target UE identifier, a backhaul adaptation protocol (BAP) routing identifier, an egress BH RLC channel identifier, or user plane tunnel information between DUs. The BAP routing identifier includes a BAP address and/or a path identifier.

In an embodiment, after the first IAB node receives the data sent by the first UE, the method includes the following.

In response to determining, by the first IAB node, that the next hop is a parent node according to configured routing selection and bearer mapping information, then the first IAB node encapsulates a BAP subheader for the data sent by the first UE, the data is mapped to the BH RLC channel between the first IAB node and the parent node for transmission.

Alternatively, in response to the first IAB node being a first donor DU, the first donor DU determines that the next hop is a second donor DU according to routing and bearer mapping information, maps the data to the user plane tunnel between the first donor DU and the second donor DU and sends the data to the second donor DU.

Alternatively, in response to the first IAB node being the first donor DU, the first donor DU determines that a donor DU corresponds to a target BAP address in a BAP subheader and that target UE included in an adaptation layer subheader of the data is not served by the first donor DU according to the BAP subheader of the data. The first donor DU sends the data to the CU.

The data transmission embodiments in several specific scenarios below are used as examples to describe the data transmission method provided by the embodiments of the present application in further detail.

### Embodiment one

In this embodiment, a scenario in which data between UE node pairs served by the same base station is locally forwarded by the base station is discussed. FIG. 10 is a diagram of the application scenario of a data transmission method according to embodiment one of the present application. As shown in FIG. 10, UE 1 and UE 2 are served by a base station 1. It is assumed that there is data transmission between the UE 1 and the UE 2. In addition to using device-to-device communication for transmission, when the UE 1 and the UE 2 are far away from each other or when device-to-device communication resources are congested, the base station 1 may be used to forward the data for the UE 1 and the UE 2, so that the data does not need to pass through a core network, thereby reducing the end-to-end latency.

To support the data transmission between the UE 1 and the UE 2, the base station 1 may configure corresponding sidelink radio bearers (SL RBs) for the UE 1 and/or the UE 2, and the data of these SL RBs need to be mapped on the Uu interface radio link control (RLC) channel between the UE 1/UE 2 and the base station 1 at a Uu interface. This means that end-to-end PC5 radio resource control (PC5 RRC), a PC5 service data adaptation protocol (PC5 SDAP), and/or a packet data convergence protocol (PDCP) needs to be established and maintained between the UE 1 and the UE 2. The encapsulated SL traffic is forwarded between the UE 1 and the base station or between the base station and the UE 2 through a Uu RLC channel. A PC5 interface is a data transmission interface between UE and may also be referred to as a reference point between UE. These Uu RLC channels for transmitting PC5 data do not need to be associated with a protocol data unit (PDU) session, nor do they need to use the user plane interface (NG-U) tunnel between the radio access network between the base station and the core network and a 5G core network. The end-to-end PC5 packet data convergence protocol (E2E PC5 PDCP) between the UE 1 and the UE 2 guarantees the SL traffic security, which means that the data is encrypted and decrypted by using the secret key negotiated between the UE 1 and the UE 2, and the data is not transparent to the base station, thereby further ensuring the security.

From the mapping of an SL RB (between the UE 1 and the UE 2) and a Uu BH RLC channel (between the UE 1 and the base station 1 or the UE 2 and the base station 1), the two implementations below may be considered.
1) 1-1 mapping: The base station 1 configures a corresponding Uu BH RLC channel for each SL RB of the UE 1 corresponding to each SL data transmission target UE. This method requires the UE 1 to maintain a large number of Uu RLC channels at the Uu interface. However, an adaptation sublayer does not need to be added, because after the base station receives the data packet sent by the UE 1, the base station may accurately locate the SL RB corresponding to the data packet and the corresponding target UE. Similarly, after the UE 1 receives the data packet sent by the base station, the UE 1 may accurately locate the SL RB corresponding to the data packet and the corresponding source UE. This method means that the configuration sent by the base station to UE may include a source and/or target UE identifier, a peer UE identifier, and/or an associated SL RB ID corresponding to the Uu RLC channel.
2) N-1 mapping: In this implementation, SL RBs having similar quality of service (QoS) of the UE 1 and/or SL RBs having similar QoS for different target UE may be mapped to the same Uu RLC channel. In this manner, the number of RLC channels at the Uu interface may be reduced. However, an adaptation layer needs to be added to assist with routing and bearer mapping of data packets.

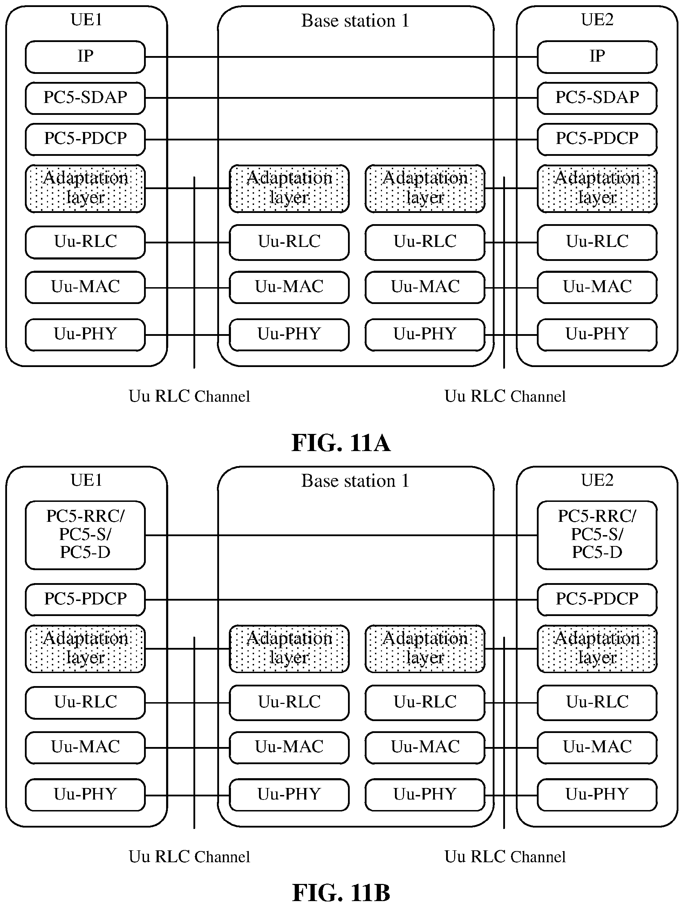

FIGS. 11A and 11A are diagrams of user plane and control plane protocol stacks in which a base station forwards data between UE 1 and UE 2. As shown in FIG. 11A, the data between the UE 1 and the UE 2 uses the SDAP and PDCP protocol layers of the PC5 interface. Optionally, the data packet between the UE 1 and the UE 2 may have an Internet protocol (IP) layer. When the UE 1 sends a data packet for the UE 2 to the base station 1, encapsulation and transmission are performed by using a radio link control (RLC), a media access control (MAC) layer, and a physical (PHY) layer of the Uu interface. Similarly, when the UE 2 receives the data packet from the UE 1 sent by the base station 1, the UE 2 uses the PHY, MAC, and RLC of the Uu interface to receive and perform de-encapsulation. There is an adaptation layer between a PC5-PDCP and Uu-RLC. The adaptation layer may include any combination of the following: an SL RB ID, a source UE ID, and a target UE ID. With the adaptation layer, N:1 bearer mapping from an SL RB to a Uu RLC channel may be better supported.

Similarly, as shown in FIG. 11B, the PC5-signaling (PC5-S) or PC5-RRC signaling or PC5-discovery (PC5-D) message between the UE 1 and the UE 2 employs the PDCP entity of the PC5 interface. When the UE 1 sends the PC5-signaling (PC5-S) or PC5-RRC signaling or PC5-discovery (PC5-D) message for the UE 2 to the base station 1, the UE 1 performs encapsulation and transmission by using the RLC, MAC, and PHY protocol layers of the Uu interface. Similarly, when the UE 2 receives the PC5-signaling (PC5-S) or PC5-RRC signaling or PC5-discovery (PC5-D) message from the UE 1 sent by the base station 1, the UE 2 uses the PHY, MAC, and RLC protocol layers of the Uu interface to receive and perform de-encapsulation. There is an adaptation layer between the PC5-PDCP and the Uu-RLC. The adaptation layer may include any combination of the following information: an SL RB ID, a source UE ID, and a target UE ID.

User plane data transmission is used as an example. After the UE 1 receives the SL data packet sent by a higher layer, the UE 1 determines the target UE corresponding to the SL data packet and maps the target UE to the corresponding SL RB and then performs the processing of PC5-SDAP and the PC5-PDCP protocol layers. Next, the UE 1 encapsulates an adaptation layer for the data packet and adds an adaptation layer subheader, which may include the SL RB ID, source UE ID, and target UE ID corresponding to the data packet. Then, the UE 1 maps the data packet to the Uu RLC channel according to the bearer mapping configuration. For example, the UE 1 may receive the bearer mapping configuration from a base station. The bearer mapping configuration may include at least one of the following information: 1) mapping of an SL RB ID and/or the source UE identifier and/or the target UE identifier to an RLC channel identifier (ID) or a logical channel identifier (ID); or mapping of a PC5 quality of service flow identifier (PFI) of the data packet to the RLC channel ID or the logical channel ID.

After the Uu RLC channel of the UE 1 receives the data packet, the Uu RLC channel performs RLC layer processing on the data packet. Then, a MAC layer schedules and assembles the data packet into a MAC PDU, and then the data packet is sent to the base station through a physical layer. After the base station receives the data packet, the data packet is processed by Uu MAC and Uu RLC. Then the adaptation layer subheader in the data packet is detected, and the data packet is mapped to the Uu RLC channel corresponding to the UE 2 according to source and/or target UE identifier information and/or SL RB ID information. After the Uu RLC channel between the base station and the UE 2 receives the data packet, the Uu RLC channel performs RLC layer processing on the data packet. Then, the MAC layer schedules and assembles the data packet into the MAC PDU, and then the data packet is sent to the UE 2 through the physical layer. After the UE 2 receives the data packet, the data packet is processed by the Uu MAC and Uu RLC. Then the adaptation layer subheader in the data packet is detected, and the data packet is mapped to the corresponding SL RB according to source and/or target UE identifier information and/or SL RB ID information. After the PDCP entity of the SL RB corresponding to the UE 2 receives the data packet, the PDCP entity performs decryption and/or integrity protection and/or decompression processing on the data packet. Finally, the data packet is submitted to the SDAP entity of the SL RB for processing and finally submitted to a higher layer. In this manner, local forwarding of the SL data packet by the base station may be implemented.

The source and target UE ID included in the adaptation layer may be a cell radio network temporary identifier (C-RNTI) assigned by the base station, a SAE temporary mobile station identifier (S-TMSI), a layer 2 (L2) destination identifier (ID) of UE, a UE identifier assigned specifically by the base station to the UE, or an identifier assigned specifically by a core network to the UE. If an identifier is not assigned by the base station, the UE may send the corresponding source UE identifier and/or target UE identifier to the base station. In addition, if the identifier is assigned by the core network, a core network element may send the corresponding UE identifier to the base station.

### Embodiment two

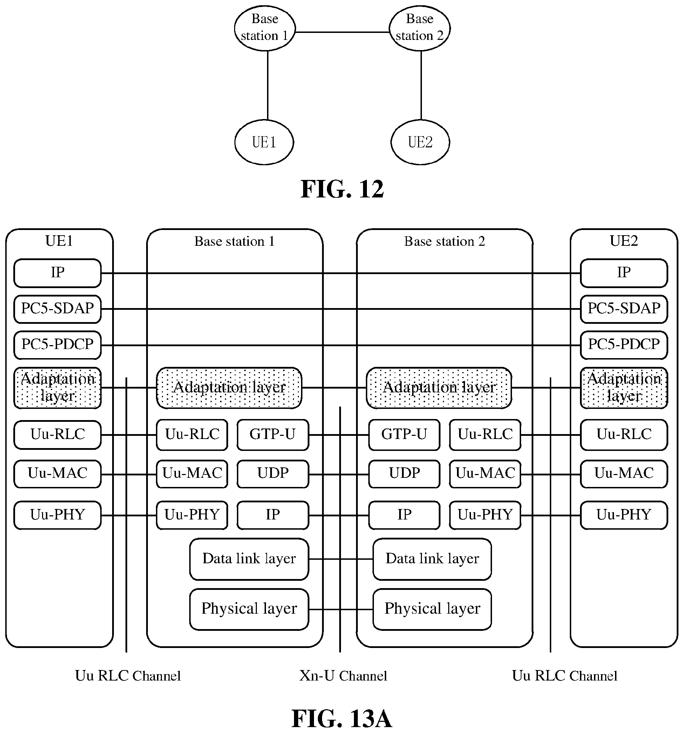

In this embodiment, a scenario in which data between UE node pairs served by different base stations is locally forwarded by the base stations is discussed. FIG. 12 is a diagram of the application scenario of a data transmission method according to embodiment two of the present application. As shown in FIG. 12, the UE 1 and UE 2 are served by a base station 1 and a base station 2 respectively. It is assumed that there is data transmission between the UE 1 and the UE 2. In addition to using device-to-device communication for transmission, when the UE 1 and the UE 2 are far away from each other or when device-to-device communication resources are congested, a base station may be used to forward the data for the UE 1 and the UE 2.

To support the data transmission between the UE 1 and the UE 2, the base station may configure corresponding SL RBs for the UE 1 and/or the UE 2. The base station 1 configures a corresponding SL RB for the UE 1. The base station 2 configures a corresponding SL RB for the UE 2. The data of these SL RBs need to be mapped on the Uu RLC channel between the UE 1/UE 2 and the base station 1 at the Uu interface. This means that end-to-end PC5 RRC, a PC5 SDAP, and/or a PDCP need to be established and maintained between the UE 1 and the UE 2. The encapsulated SL traffic is forwarded between the UE 1 and the base station or between the base station and the UE 2 through the Uu RLC channel. These Uu RLC channels for transmitting PC5 data do not need to be associated with the PDU session, nor do they need to use the NG-U tunnel between the base station and the core network. The E2E PC5 PDCP between the UE 1 and the UE 2 guarantees the SL traffic security, which means that the data is encrypted and decrypted by using the secret key negotiated between the UE 1 and the UE 2, and the data is not transparent to the base station, thereby further ensuring the security.

For the mapping of an SL RB (between the UE 1 and the UE 2) and a Uu BH RLC channel (between the UE 1 and the base station 1 or the UE 2 and the base station 2), the two implementations below may be considered.
1) 1-1 mapping: The base station 1 configures the corresponding Uu BH RLC channel for each SL RB of the UE 1 corresponding to each SL data transmission target UE. This method requires the UE 1 to maintain a large number of Uu RLC channels at the Uu interface. However, an adaptation sublayer does not need to be added, because after the base station 1 receives the data packet sent by the UE 1, the base station 1 may accurately locate the SL RB corresponding to the data packet and the corresponding target UE. Similarly, after the UE 1 receives the data packet sent by the base station 1, the UE 1 may accurately locate the SL RB corresponding to the data packet and the corresponding source UE. This method means that the configuration sent by the base station to UE may include a peer UE identifier and/or an associated SL RB ID corresponding to the Uu RLC channel.
2) N-1 mapping: In this implementation, SL RBs having similar QoS of the UE 1 and/or SL RBs having similar QoS for different target UE may be mapped to the same Uu BH RLC channel. In this manner, the number of RLC channels at the Uu interface may be reduced. However, an adaptation layer needs to be added to assist with routing and bearer mapping of data packets.

In addition, a GTP-U tunnel is established between the base station 1 and the base station 2 for forwarding SL data between the base stations. An Xn interface is used as an example. It is necessary to consider the mapping between an SL RB (the UE 1 and the UE 2) and the Xn-U tunnel (between the base station 1 and the base station 2) between base stations. Similarly, the two implementations below may be considered.
1) 1-1 mapping: A base station configures a corresponding Xn-U tunnel for each SL RB between each source target UE node pair. This method requires the base station to maintain a large number of Xn-U tunnels at an Xn interface. If the Uu RLC channel also uses the 1:1 mapping at the same time, the SL data packet forwarded by the base station does not need to add an adaptation subheader. After the base station receives the SL data packet, the base station may accurately locate the SL RB and source and target UE corresponding to the data packet. Similarly, after the UE 1 receives the data packet sent by the base station, the UE 1 may accurately locate the SL RB corresponding to the data packet and the corresponding source UE. This method means that the Xn-U tunnel information sent by the base station 1 to the base station 2 includes a source and/or target UE identifier, a peer UE identifier, and/or an associated SL RB ID associated with the Xn-U tunnel.
2) N-1 mapping: In this implementation, an SL RB having similar QoS for the same UE or different UE may be mapped to the same Xn-U channel. In this manner, the number of Xn-U channels at an Xn interface may be reduced. However, an adaptation layer needs to be added to assist with routing and bearer mapping of data packets.

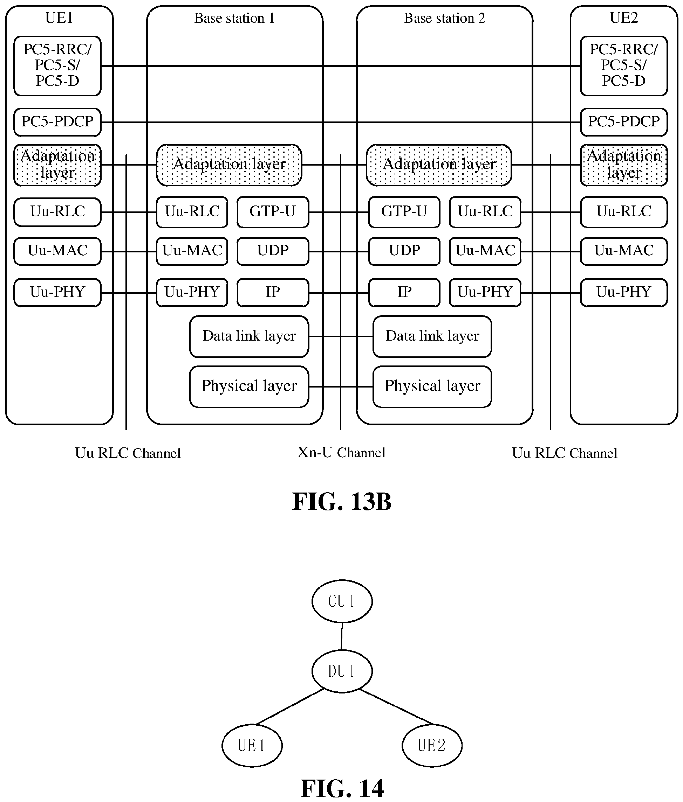

FIGS. 13A and 13B are diagrams of user plane and control plane protocol stacks in which a base station 1 and a base station 2 forward data between UE 1 and UE 2. As shown in FIG. 13A, the data between the UE 1 and the UE 2 uses the SDAP and PDCP protocol layers of the PC5 interface. The IP layer of the data packet between the UE 1 and UE 2 is optional. When the UE 1 sends the data packet for the UE 2 to the base station 1, the UE 1 performs encapsulation and transmission by using the RLC, MAC, and PHY of the Uu interface. Similarly, when the UE 2 receives the data packet from the UE 1 sent by the base station 2, the UE 2 uses the PHY, MAC, and RLC of the Uu interface to receive and perform de-encapsulation. There is an adaptation layer between the PC5-PDCP and the Uu-RLC. The adaptation layer may include any combination of the following information: an SL RB ID, a source UE ID, and a target UE ID. With the adaptation layer, N:1 bearer mapping from an SL RB to a Uu RLC channel may be better supported. In addition, when the data packet between the UE 1 and the UE 2 is transmitted between the base station 1 and the base station 2, it is necessary to encapsulate a PDU in a GTP-U/UDP/IP subheader and send it to the opposite base station through an Xn-U tunnel.

Similarly, as shown in FIG. 13B, the PC5-signaling (PC5-S) or PC5-RRC signaling or PDCP (PC5-D) message between the UE 1 and the UE 2 employs the PDCP entity of the PC5 interface. When the UE 1 sends the PC5-signaling (PC5-S) or PC5-RRC signaling or PC5-discovery (PC5-D) message for the UE 2 to the base station 1, the UE 1 performs encapsulation and transmission by using the RLC, MAC, and PHY protocol layers of the Uu interface. Similarly, when the UE 2 receives the PC5-signaling (PC5-S) or PC5-RRC signaling or PC5-discovery (PC5-D) message from the UE 1 sent by the base station 2, the UE 2 uses the PHY, MAC, and RLC protocol layers of the Uu interface to receive and perform de-encapsulation. There is an adaptation layer between the PC5-PDCP and the Uu-RLC. The adaptation layer may include any combination of the following information: an SL RB ID, a source UE ID, and a target UE ID. In addition, when the UE 2 receives the PC5-signaling (PC5-S) or PC5-RRC signaling or PC5-discovery (PC5-D) message between the UE 1 and the UE 2 is transmitted between the base station 1 and base station 2, it is necessary to encapsulate the PDU in the GTP-U/UDP/IP subheader and send it to the opposite base station through the Xn-U tunnel.

In an example, an Xn-C connection may also be used to transmit the PC5-signaling (PC5-S) or PC5-RRC signaling or PDCP (PC5-D) message between the UE 1 and the UE 2. For example, the GTP-U/UDP/IP protocol stack between the base station 1 and base station 2 may be replaced with a stream control transmission protocol (SCTP)/IP protocol stack for transmitting the PC5-signaling (PC5-S) or PC5-RRC signaling or PDCP (PC5-D) message between the UE 1 and the UE 2.

User plane data transmission is used as an example. After the UE 1 receives the SL data packet sent by a higher layer, the UE 1 determines the target UE corresponding to the SL data packet and maps the target UE to the corresponding SL RB and then performs the processing of PC5-SDAP and the PC5-PDCP protocol layers. Next, the UE 1 encapsulates an adaptation layer for the data packet and adds an adaptation layer subheader, which may include the SL RB ID, source UE ID, and target UE ID corresponding to the data packet. Then, the UE 1 maps the data packet to the Uu RLC channel according to the bearer mapping configuration.

After the Uu RLC channel of the UE 1 receives the data packet, the Uu RLC channel performs RLC layer processing on the data packet. Then, the MAC layer schedules and assembles the data packet into the MAC PDU, and then the data packet is sent to the base station 1 through a physical layer. After the base station 1 receives the data packet, the data packet is processed by the Uu MAC and Uu RLC. Then the adaptation layer subheader in the data packet is detected, and the data packet is mapped to the corresponding Xn-U tunnel according to source and/or target UE identifier information and/or SL RB ID information.

Before the base station 1 forwards the data packet between the UE 1 and the UE 2 to the base station 2, one or more Xn GTP-U tunnels may be established between the base station 1 and the base station 2 for forwarding of the SL signaling and/or data. These Xn GTP-U tunnels may be UE-specific, or non-UE-specific, or SL-RB specific. A UE-specific GTP-U tunnel corresponds to SL signaling and/or data forwarding between two UE node pairs served by the base station 1 and base station 2 separately. An SL-RB specific Xn GTP-U tunnel corresponds to one or more SL RBs between two UE node pairs served by the base station 1 and base station 2 separately. Here, the SL-RB specific GTP-U tunnel may correspond to each SL RB or may correspond to multiple SL RBs. In addition, a non-UE-specific Xn GTP-U tunnel is used for forwarding the data between different UE node pairs or SL broadcast or multicast data. In an example, corresponding to different broadcast or multicast target identifiers, it is possible to establish different non-UE-specific Xn GTP-U tunnels for forwarding corresponding broadcast or multicast data between base stations.

For example, an Xn-U tunnel may be created by the following signaling flow. The base station 1 sends an SL forwarding request to the base station 2. The SL forwarding request may include any combination of the following information: an SL sending request, an SL receiving request, SL forwarding user plane transport layer information, QoS information, an SL RB ID, PC5-S, PC5-RRC, PC5-D, a source UE identifier, or a target UE identifier or a target group identifier or a target broadcast identifier, and a unicast or multicast or broadcast indication. The SL forwarding user plane transport layer information may include GTP-tunnel information, such as a transport layer address and a GTP-TEID. The QoS information may include any combination of the following information: a PC5 5G QoS Identifier (PQI), an RLC mode, a QoS parameter of an SL RB, a QoS flow identifier mapped to the SL RB, and the QoS parameter of a QoS flow. After the base station 2 receives the SL forwarding request information, the base station 2 may send SL forwarding response information to the base station 1. The SL forwarding response information may include any combination of the following information: SL forwarding user plane transport layer information, an SL RB ID, a received QFI, PC5-S, PC5-RRC, PC5-D, a source UE identifier, and a target UE identifier or a target group identifier or a target broadcast identifier. The SL forwarding user plane transport layer information may include GTP-tunnel information, such as a transport layer address and a GTP-TEID. The SL forwarding user plane transport layer information included in the SL forwarding request information is for the transport layer information on the side of the base station 1, and the SL forwarding user plane transport layer information included in the SL forwarding response information is for the transport layer information on the side of the base station 2. If an SL RB-specific GTP-U tunnel is corresponded, an SL RB ID corresponds to a piece of SL forwarding user plane transport layer information in SL forwarding request and response messages. If a UE-specific GTP-U tunnel is corresponded, each of a source UE identifier and a target UE identifier corresponds to a piece of SL forwarding user plane transport layer information . If a broadcast or multicast UE-specific GTP-U tunnel is corresponded, a target group identifier or a target broadcast identifier corresponds to a piece of SL forwarding user plane transport layer information. If non-UE specific GTP-U tunnels of different PC5 signaling types are corresponded, a type of PC5-S or PC5-RRC or PC5-D corresponds to a piece of SL forwarding user plane transport layer information . In addition, it is also possible to consider that one or more SL signaling radio bearers (SRBs) or data radio bearers (DRBs) may be mapped to an Xn GTP-U tunnel.

When the base station 1 sends the data packet between the UE 1 and the UE 2 to the base station 2, it is necessary to encapsulate the PDU in the GTP-U/UDP/IP subheader and send it to an opposite base station 2 through the Xn-U tunnel. After the base station 2 receives the data packet between the UE 1 and the UE 2, the base station 2 parses the GTP-U/UDP/IP subheader. Then the adaptation layer subheader in the data packet is detected, and the data packet is mapped to the Uu RLC channel corresponding to the UE 2 according to source and/or target UE identifier information and/or SL RB ID information. After the Uu RLC channel between the base station and the UE 2 receives the data packet, the Uu RLC channel performs RLC layer processing on the data packet. Then, the MAC layer schedules and assembles the data packet into the MAC PDU, and then the data packet is sent to the UE 2 through the physical layer. After the UE 2 receives the data packet, the data packet is processed by the Uu MAC and Uu RLC. Then the adaptation layer subheader in the data packet is detected, and the data packet is mapped to the corresponding SL RB according to source and/or target UE identifier information and/or SL RB ID information. After the PDCP entity of the SL RB corresponding to the UE 2 receives the data packet, the PDCP entity performs decryption and/or integrity protection and/or decompression processing on the data packet. Finally, the data packet is submitted to the SDAP entity of the SL RB for processing and finally submitted to a higher layer. In this manner, local forwarding of the SL data packet across the base station may be implemented.

### Embodiment three

In this embodiment, in a centralized unit (CU)/distributed unit (DU) separation scenario, a scenario in which data between UE node pairs served by the same DU is locally forwarded by the DU is discussed. FIG. 14 is a diagram of the application scenario of a data transmission method according to embodiment three of the present application. As shown in FIG. 14, the UE 1 and UE 2 are served by a DU 1. It is assumed that there is data transmission between the UE 1 and the UE 2. The DU 1 may be used to forward the data for the UE 1 and the UE 2, so that the data does not need to pass through the core network, thereby reducing the end-to-end latency.

To support the data transmission between the UE 1 and the UE 2, a CU 1 may configure corresponding SL RBs for the UE 1 and/or the UE 2. The data of these SL RBs need to be mapped on the Uu RLC channel between the UE 1/UE 2 and the DU 1 at the Uu interface. The CU also configures the PC5 RRC, PC5 SDAP, and/or PC5 PDCP between the UE 1 and UE 2 for the UE 1 and/or UE 2. The encapsulated SL traffic is transmitted between the UE 1 and the base station or between the base station and the UE 2 through the Uu RLC channel. These Uu RLC channels for transmitting PC5 data do not need to be associated with the PDU session, do not need to use the NG-U tunnel between the base station and the core network, and do not need to establish an F1-U tunnel for them. The E2E PC5 PDCP between the UE 1 and the UE 2 guarantees the SL traffic security, which means that the data is encrypted and decrypted by using the secret key negotiated between the UE 1 and the UE 2, and the data is not transparent to the base station, thereby further ensuring the security.

Similar to the preceding embodiments, for the mapping of an SL RB (between the UE 1 and the UE 2) and a Uu BH RLC channel (between the UE 1 and the DU 1 or the UE 2 and the DU 1), the two implementations below may be considered.
1) 1-1 mapping: The CU 1 configures the corresponding Uu RLC RLC channel for each SL RB of the UE 1 corresponding to each SL data transmission target UE. In this manner, an adaptation sublayer does not need to be added, because after the DU 1 receives the data packet sent by the UE 1, the DU 1 may determine the SL RB corresponding to the data packet and the corresponding target UE according to the configuration information associated with the corresponding Uu RLC channel. Similarly, after the UE 1 receives the data packet sent by the DU 1, the UE 1 may determine the SL RB corresponding to the data packet and the corresponding source UE according to the configuration information associated with the corresponding Uu RLC channel. This method means that the configuration sent by the CU 1 to UE may include a source and/or target UE identifier, a peer UE identifier, and/or an associated SL RB ID corresponding to the Uu RLC channel. Similarly, the CU 1 sends the Uu RLC channel configuration information to the DU 1. The Uu RLC channel configuration information may include any combination of the following information: a Uu RLC channel ID, a source UE identifier, a target UE identifier, a peer UE identifier, an RLC mode, the QoS profile of a Uu RLC channel, the QoS profile of an SL RB mapped to the Uu RLC channel, the QoS profile of a QoS flow mapped to the Uu RLC channel, an associated SL RB ID(s), a priority, and a control signaling type. The control signaling type may be at least one of the following: PC5-S, PC5-RRC, or PC5-D. After the DU 1 receives the Uu RLC channel configuration establishment/modification/release request sent by the CU 1, a successfully configured Uu RLC channel list, a Uu RLC channel that fails to configure, and/or a failure reason may be sent to the CU 1. For the successfully configured Uu RLC channel, the DU 1 sends specific RLC, logical channel, and/or MAC related configuration to the CU 1.
2) N-1 mapping: In this implementation, SL RBs having similar QoS of the UE 1 and/or SL RBs having similar QoS for different target UE may be mapped to the same Uu RLC channel. In this manner, the number of RLC channels at the Uu interface may be reduced. However, an adaptation layer needs to be added to assist with routing and bearer mapping of data packets. Similarly, the configuration sent by the CU 1 to UE may include one or more SL RB IDs, source UE identifiers, and/or target UE identifiers associated with the Uu RLC channel. Similarly, the CU 1 sends the Uu RLC channel configuration information to the DU 1. The Uu RLC channel configuration information may include any combination of the following information: a Uu RLC channel ID, an RLC mode, the QoS profile of a Uu RLC channel, the QoS profile of an SL RB mapped to the Uu RLC channel, the QoS profile of a QoS flow mapped to the Uu RLC channel, an SL RB ID(s) and/or a source UE identifier and/or a target UE identifier and/or a peer UE identifier mapped to the Uu RLC channel, a priority, and a control signaling type. The control signaling type may be at least one of the following: PC5-S, PC5-RRC, or PC5-D. After the DU 1 receives the Uu RLC channel configuration establishment/modification/release request sent by the CU 1, a successfully configured Uu RLC channel list, a Uu RLC channel that fails to configure, and/or a failure reason may be sent to the CU 1. For the successfully configured Uu RLC channel, the DU 1 sends specific RLC, logical channel, and/or MAC related configuration to the CU 1.

In addition, the CU 1 may also send the Uu RLC channel mapping configuration to the DU 1, which may specifically include UE 1 identifier information, Uu RLC channel ID 1 information, UE 2 identifier information, and Uu RLC channel ID 2 information. A UE 1 identifier or a UE 2 identifier may include at least one of the following: a CU UE F1AP ID, a DU UE F1AP ID, a C-RNTI, an L2 ID, or a UE identifier assigned by the CU.

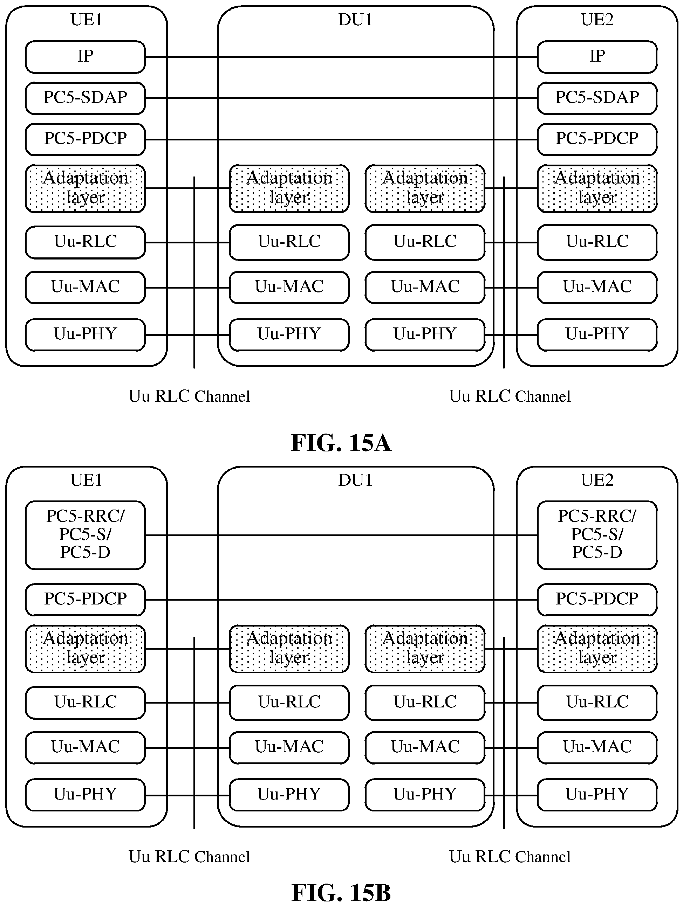

FIGS. 15A and 15B are diagrams of user plane and control plane protocol stacks in which a DU 1 forwards data between UE 1 and UE 2. As shown in FIG. 15 A, the data between the UE 1 and the UE 2 uses the SDAP and PDCP protocol layers of the PC5 interface. Optionally, the data packet between the UE 1 and the UE 2 may have an IP layer. When the UE 1 sends the data packet for the UE 2 to the DU 1, the UE 1 performs encapsulation and transmission by using the RLC, MAC, and PHY of the Uu interface. Similarly, when the UE 2 receives the data packet from the UE 1 sent by the DU 1, the UE 2 uses the PHY, MAC, and RLC of the Uu interface to receive and perform de-encapsulation. There is an adaptation layer between the PC5-PDCP and the Uu-RLC. The adaptation layer may include any combination of the following information: an SL RB ID, a source UE ID, and a target UE ID.

Similarly, as shown in FIG. 15B, the PC5-signaling (PC5-S) or PC5-RRC signaling or PDCP (PC5-D) message between the UE 1 and the UE 2 employs the PDCP entity of the PC5 interface. When the UE 1 sends the PC5-signaling (PC5-S) or PC5-RRC signaling or PC5-discovery (PC5-D) message for the UE 2 to the DU 1, the UE 1 performs encapsulation and transmission by using the RLC, MAC, and PHY protocol layers of the Uu interface. Similarly, when the UE 2 receives the PC5-signaling (PC5-S) or PC5-RRC signaling or PC5-discovery (PC5-D) message from the UE 1 sent by the DU 1, the UE 2 uses the PHY, MAC, and RLC protocol layers of the Uu interface to receive and perform de-encapsulation. There is an adaptation layer between the PC5-PDCP and the Uu-RLC. The adaptation layer may include any combination of the following information: an SL RB ID, a source UE ID, and a target UE ID.

User plane data transmission is used as an example. After the UE 1 receives the SL data packet sent by a higher layer, the UE 1 determines the target UE corresponding to the SL data packet and maps the target UE to the corresponding SL RB and then performs the processing of PC5-SDAP and the PC5-PDCP protocol layers. Next, the UE 1 encapsulates an adaptation layer for the data packet and adds an adaptation layer subheader, which may include the SL RB ID, source UE ID, and target UE ID corresponding to the data packet. Then, the UE 1 maps the data packet to the Uu RLC channel according to the bearer mapping configuration. For example, the UE 1 may receive the bearer mapping configuration from a base station. The bearer mapping configuration may include at least one of the following information: 1) mapping of an SL RB ID and/or the source UE identifier and/or the target UE identifier to an RLC channel ID or a logical channel ID; or 2) mapping of a PFI of the data packet to the RLC channel ID or the logical channel ID.

After the Uu RLC channel of the UE 1 receives the data packet, the Uu RLC channel performs RLC layer processing on the data packet. Then, the MAC layer schedules and assembles the data packet into the MAC PDU, and then the data packet is sent to the DU 1 through the physical layer. After the DU 1 receives the data packet, the data packet is processed by the Uu MAC and Uu RLC. Next, the DU 1 performs routing and bearer mapping on the data packet. Specifically, the solutions below may be included.
1) Assuming that the data packet does not include an adaptation layer subheader, the DU 1 determines whether mapping information corresponding to the Uu RLC channel 1 of the UE 1 exists according to the Uu RLC channel 1 information corresponding to the data packet and the Uu RLC channel mapping configuration received by the DU 1 from the CU 1 (such as a UE 1 identifier, the Uu RLC channel ID of the UE 1, a UE 2 identifier, and the Uu RLC channel ID information of the UE 2). If the mapping information exists, the data packet is mapped and delivered to a corresponding Uu RLC channel of the UE 2.
2) Assuming that the data packet does not include an adaptation layer subheader, the DU 1 finds an SL RB ID, a source UE identifier, and a target UE identifier corresponding to the Uu RLC channel according to the Uu RLC channel 1 information corresponding to the data packet. The DU 1 determines whether the target UE identifier corresponds to the UE served by the DU 1. If the target UE identifier corresponds to the UE, the DU 1 searches for a Uu RLC channel corresponding to target UE. If it can be found that the Uu RLC channel is associated with an SL RB between the same pair of a UE 1 node and a UE 2 node, the DU 1 maps and delivers the data packet to a corresponding Uu RLC channel of the UE 2.
3) Assuming that the data packet does not include an adaptation layer subheader, the DU 1 detects the adaptation layer subheader in the data packet and determines whether a target UE identifier corresponds to the UE served by the DU 1. If the target UE identifier does not correspond to the UE, the DU 1 performs forwarding. If the target UE identifier corresponds to the UE, the DU 1 performs bearer mapping. For example, the DU 1 finds a Uu RLC channel of the UE 2 according to SL RB ID information, source UE identifier information and/or target UE identifier information included in the adaptation layer subheader, and the bearer mapping information such as SL RB information associated with the Uu RLC channel, or Uu RLC channel mapping configuration such as UE 1 identifier, the Uu RLC channel ID of the UE 1, a UE 2 identifier, and the Uu RLC channel ID information of the UE 2, and delivers the data packet to the corresponding Uu RLC channel.

The DU 1 continues to perform RLC layer processing on the data packet. Then, the MAC layer schedules and assembles the data packet into the MAC PDU, and then the data packet is sent to the UE 2 through the physical layer. After the UE 2 receives the data packet, the data packet is processed by the Uu MAC and Uu RLC. Then the adaptation layer subheader in the data packet is detected, and the data packet is mapped to the corresponding SL RB according to source and/or target UE identifier information and/or SL RB ID information. After the PDCP entity of the SL RB corresponding to the UE 2 receives the data packet, the PDCP entity performs decryption and/or integrity protection and/or decompression processing on the data packet. Finally, the data packet is submitted to the SDAP entity of the SL RB for processing and finally submitted to a higher layer. In this manner, local forwarding of the SL data packet by the DU 1 may be implemented.

In addition, it may also be considered that after the DU 1 receives the data packet sent by the UE 1, the PDU is encapsulated in the GTP/UDP/IP subheader, and then the data packet is transmitted to the CU 1 through an F1-U tunnel. Here, the F1-U tunnel may be pre-configured for the DU 1 by the CU 1, and the F1-U tunnel may be a per SL RB or a per Uu RLC channel. The per Uu RLC channel is used as an example. The Uu RLC channel configuration information of the UE 1 or the UE 2 sent by the CU 1 to the DU 1 may further include the user plane transport layer information of the F1-U tunnel corresponding to the Uu RLC channel, such as the transport layer address and GTP-TEID of a GTP-tunnel.

After the CU 1 receives the data packet from the DU 1, the GTP/UDP/IP subheader is removed. Then, it is determined that the corresponding target UE is the UE 2 according to an adaptation layer subheader, and the data packet is mapped to the Uu RLC channel corresponding to the UE 2. In an example, the CU 1 encapsulates the GTP-U tunnel corresponding to the Uu RLC channel to the UE 2 in the GTP/UDP/IP subheader and sends the data packet to the DU 1. The DU 1 continues to perform RLC layer processing on the data packet. Then, the MAC layer schedules and assembles the data packet into the MAC PDU, and then the data packet is sent to the UE 2 through the physical layer. After the UE 2 receives the data packet, the data packet is processed by the Uu MAC and Uu RLC. Then the adaptation layer subheader in the data packet is detected, and the data packet is mapped to the corresponding SL RB according to source and/or target UE identifier information and/or SL RB ID information. After the PDCP entity of the SL RB corresponding to the UE 2 receives the data packet, the PDCP entity performs decryption and/or integrity protection and/or decompression processing on the data packet. Finally, the data packet is submitted to the SDAP entity of the SL RB for processing and finally submitted to a higher layer. In this manner, local forwarding of the SL data packet by the DU 1 and the CU 1 may be implemented.

### Embodiment four

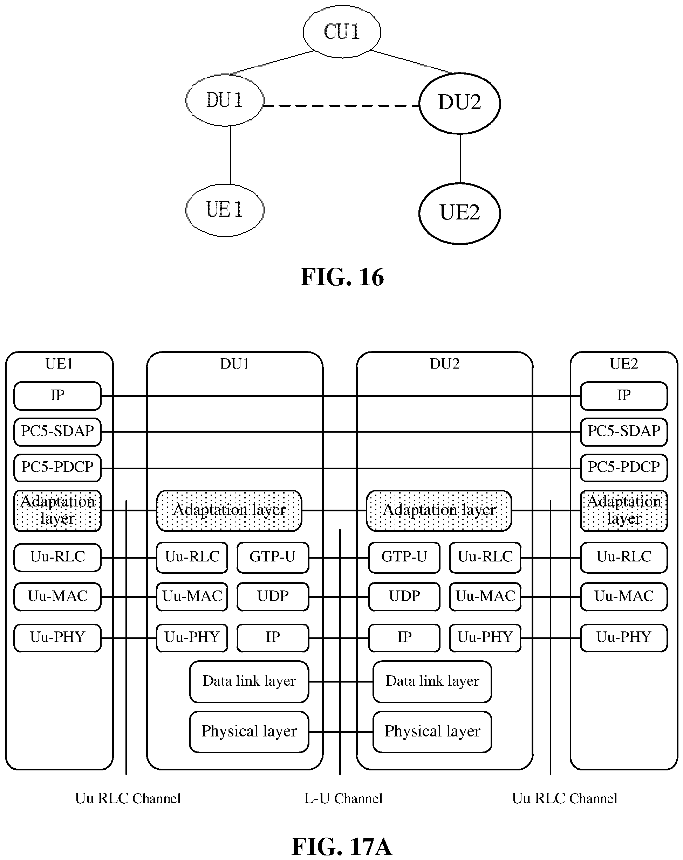

In this embodiment, in the CU/DU separation scenario, a scenario in which data between UE node pairs served by different DUs is locally forwarded across the DUs is discussed. FIG. 16 is a diagram of the application scenario of a data transmission method according to embodiment four of the present application. As shown in FIG. 16, the UE 1 and UE 2 are served by the DU 1 and a DU 2 respectively. It is assumed that there is data transmission between the UE 1 and the UE 2. The DU 1 and the DU 2 may be used to forward the data for the UE 1 and the UE 2, so that the data does not need to pass through the core network, thereby reducing the end-to-end latency.

To support the data transmission between the UE 1 and the UE 2, the CU 1 may configure corresponding SL RBs for the UE 1 and/or the UE 2. The data of these SL RBs need to be mapped on the Uu RLC channel between the UE 1/UE 2 and the DU 1 at the Uu interface. The CU also configures the PC5 RRC, PC5 SDAP, and/or PC5 PDCP between the UE 1 and UE 2 for the UE 1 and/or UE 2. The encapsulated SL traffic is transmitted between the UE 1 and the base station or between the base station and the UE 2 through the Uu RLC channel. These Uu RLC channels for transmitting the PC5 data do not need to be associated with the PDU session, do not need to use the NG-U tunnel between the base station and the core network, and do not need to establish the F1-U tunnel for them. The E2E PC5 PDCP between the UE 1 and the UE 2 guarantees the SL traffic security, which means that the data is encrypted and decrypted by using the secret key negotiated between the UE 1 and the UE 2, and the data is not transparent to the base station, thereby further ensuring the security.

Similar to the preceding embodiments, for the mapping of the SL RB (between the UE 1 and the UE 2) and the Uu RLC channel (between the UE 1 and the DU 1 or the UE 2 and the DU 2), 1: 1 mapping or N: 1 mapping may be considered for adoption. For N: 1 mapping, the number of RLC channels at the Uu interface may be reduced. However, an adaptation layer needs to be added to assist with routing and bearer mapping of data packets. To forward the data packet between the DU 1 and the DU 2, the DU 1 and the DU 2 may establish an interface for transmitting the forwarded data packet. It is assumed that the interface between the DU 1 and the DU 2 is referred to as an L interface. To establish the L interface, the CU 1 may send the IP address information of the DU 2 to the DU 1, or the CU 1 may send the IP address information of the DU 1 to the DU 2. The DU 1 may send L interface establishment request information to the DU 2. The information may include cell information (such as an NCGI, a PCI, and a PLMN) of the DU 1. After the DU 2 receives the message, the DU 2 may send L interface establishment response information. The L interface establishment response information may include cell information (such as an NCGI, a PCI, and a PLMN) of the DU 2. The user plane tunnel of the L interface may also be established between the DU 1 and the DU 2, such as an L-U tunnel. The L-U tunnel may be configured by the CU 1 or may be established through negotiation between the DU 1 and the DU 2. For example, if the L-U tunnel is configured by the CU 1, the CU 1 may send L-U tunnel configuration information to the DU 1 and/or the DU 2. The L-U tunnel configuration information may include any combination of the following information: user plane transport layer information of the L-U tunnel, such as the transport layer address and GTP-TEID of a GTP-tunnel, one or more associated Uu RLC channel IDs, one or more associated SL RB IDs, a source UE identifier and/or a target UE identifier, QoS profile of the L-U tunnel or the Uu RLC channel or an SL RB or a QoS flow, a priority, and a control signaling type. The control signaling type may be at least one of the following: PC5-S, PC5-RRC, or PC5-D. After the DU 1 receives the L-U channel configuration establishment/modification/release request sent by the CU 1, a successfully configured L-U tunnel list, an L-U tunnel list that fails to configure, and/or a failure reason may be sent to the CU 1.

In addition, the CU 1 may also send the L-U channel configuration information to the DU 2. The L-U tunnel configuration information may include any combination of the following information: user plane transport layer information of the L-U tunnel, such as the transport layer address and GTP-TEID of the GTP-tunnel, one or more associated Uu RLC channel IDs, one or more associated SL RB IDs, a source UE identifier and/or a target UE identifier, QoS profile of the L-U tunnel or the Uu RLC channel or an SL RB or a QoS flow, a priority, and a control signaling type. The control signaling type may be at least one of the following: PC5-S, PC5-RRC, or PC5-D. After the DU 2 receives the L-U channel configuration establishment/modification/release request sent by the DU 1, the DU 2 may send any combination of the following information to the DU 1: a successfully configured L-U tunnel list, user plane transport layer information of the L-U tunnel, such as the transport layer address and GTP-TEID configuration of the GTP-tunnel, a L-U tunnel list that fails to configure, and/or a failure reason.

In addition, the CU 1 may configure routing and bearer mapping information to the DU 1 and/or the DU 2. For example, the CU 1 may send any combination of the following information to the DU 1: an SL RB ID, a source UE identifier, a target UE identifier, and next hop information. The next hop information may be 1) the identifier of a CU and/or F1-U tunnel information, or 2) the identifier of a DU and/or L-U tunnel information, or 3) the UE identifier and/or Uu RLC channel information.

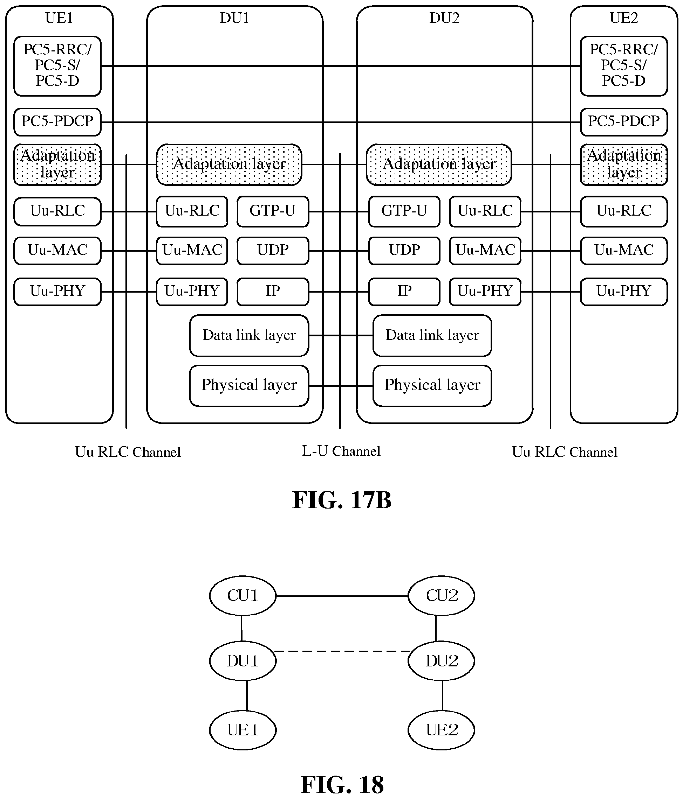

FIGS. 17A and 17B are diagrams of user plane and control plane protocol stacks in which a DU 1 and a DU 2 forward data between UE 1 and UE 2. As shown in FIG. 17A, the data between the UE 1 and the UE 2 uses the SDAP and PDCP protocol layers of the PC5 interface. Optionally, the data packet between the UE 1 and the UE 2 may have an IP layer. When the UE 1 sends the data packet for the UE 2 to the DU 1, the UE 1 performs encapsulation and transmission by using the RLC, MAC, and PHY of the Uu interface. Similarly, when the UE 2 receives the data packet from the UE 1 sent by the DU 2, the UE 2 uses the PHY, MAC, and RLC of the Uu interface to receive and perform de-encapsulation. There is an adaptation layer between the PC5-PDCP and the Uu-RLC. The adaptation layer may include any combination of the following information: an SL RB ID, a source UE ID, and a target UE ID. When the data packet is forwarded between the DU 1 and the DU 2, the data packet is encapsulated in the GTP-U/UDP/IP subheader and then forwarded through the direct interface between the DU 1 and the DU 2.

Similarly, as shown in FIG. 17B, the PC5-signaling (PC5-S) or PC5-RRC signaling or PDCP (PC5-D) message between the UE 1 and the UE 2 employs the PDCP entity of the PC5 interface. When the UE 1 sends the PC5-signaling (PC5-S) or PC5-RRC signaling or PC5-discovery (PC5-D) message for the UE 2 to the DU 1, the UE 1 performs encapsulation and transmission by using the RLC, MAC, and PHY protocol layers of the Uu interface. Similarly, when the UE 2 receives the PC5-signaling (PC5-S) or PC5-RRC signaling or PC5-discovery (PC5-D) message from the UE 1 sent by the DU 2, the UE 2 uses the PHY, MAC, and RLC protocol layers of the Uu interface to receive and perform de-encapsulation. There is an adaptation layer between the PC5-PDCP and the Uu-RLC. The adaptation layer may include any combination of the following information: an SL RB ID, a source UE ID, and a target UE ID.

User plane data transmission is used as an example. After the UE 1 receives the SL data packet sent by a higher layer, the UE 1 determines the target UE corresponding to the SL data packet and maps the target UE to the corresponding SL RB and then performs the processing of PC5-SDAP and the PC5-PDCP protocol layers. Next, the UE 1 encapsulates an adaptation layer for the data packet and adds an adaptation layer subheader, which may include the SL RB ID, source UE ID, and target UE ID corresponding to the data packet. Then, the UE 1 maps the data packet to the Uu RLC channel according to the bearer mapping configuration. For example, the UE 1 may receive bearer mapping configuration from a base station. The bearer mapping configuration may include at least one of the following information: 1) mapping of an SL RB ID and/or a source UE identifier and/or a target UE identifier to an RLC channel ID or a logical channel ID; or 2) mapping of the PFI of the data packet to the RLC channel ID or the logical channel ID.

After the Uu RLC channel of the UE 1 receives the data packet, the Uu RLC channel performs RLC layer processing on the data packet. Then, the MAC layer schedules and assembles the data packet into the MAC PDU, and then the data packet is sent to the DU 1 through the physical layer. After the DU 1 receives the data packet, the data packet is processed by the Uu MAC and Uu RLC. Next, the DU 1 performs routing and bearer mapping on the data packet. For example, the DU 1 checks SL RB ID information associated with a Uu RLC channel included in an adaptation layer, source UE identifier information, and target UE identifier information and routing and bearer mapping information configured by a CU and finds bearer information and a node corresponding to the next hop. Assuming that the next hop corresponding to the data packet is the identifier of the DU 2, the DU 1 maps the data packet to the L-U tunnel corresponding to the DU 1 and the DU 2 and sends the data packet to the DU 2.

For example, after the DU 2 receives the data packet, the DU 2 finds the associated Uu RLC channel according to the L-U tunnel. Alternatively, the DU 2 finds the Uu RLC channel of the UE 2 according to SL RB ID information, source UE identifier information and/or target UE identifier information included in the adaptation layer subheader, and the bearer mapping information such as SL RB information associated with the Uu RLC channel, or Uu RLC channel mapping configuration such as UE 1 identifier, the Uu RLC channel ID of the UE 1, a UE 2 identifier, and the Uu RLC channel ID information of the UE 2 and delivers the data packet to the corresponding Uu RLC channel. The DU 2 continues to perform RLC layer processing on the data packet. Then, the MAC layer schedules and assembles the data packet into the MAC PDU, and then the data packet is sent to the UE 2 through the physical layer. After the UE 2 receives the data packet, the data packet is processed by the Uu MAC and Uu RLC. Then the adaptation layer subheader in the data packet is detected, and the data packet is mapped to the corresponding SL RB according to source and/or target UE identifier information and/or SL RB ID information. After the PDCP entity of the SL RB corresponding to the UE 2 receives the data packet, the PDCP entity performs decryption and/or integrity protection and/or decompression processing on the data packet. Finally, the data packet is submitted to the SDAP entity of the SL RB for processing and finally submitted to a higher layer. In this manner, local forwarding of the SL data packet by the DU 1 may be implemented.

In an example, assuming that after the DU 1 receives the data packet sent by the UE 1, DU 1 checks routing and bearer mapping configuration and determines that the next hop corresponds to a CU and the F1-U tunnel, the DU 1 transmits the data packet to the CU 1 through the F1-U tunnel. Here, the F1-U tunnel may be pre-configured for the DU 1 by the CU 1, and the F1-U tunnel may be a per SL RB or a per Uu RLC channel. The per Uu RLC channel is used as an example. The Uu RLC channel configuration information of the UE 1 or the UE 2 sent by the CU 1 to the DU 1 may further include the user plane transport layer information of the F 1-U tunnel corresponding to the Uu RLC channel, such as the transport layer address and GTP-TEID of the GTP-Tunnel.

After the CU 1 receives the data packet from the DU 1, the GTP/UDP/IP subheader is removed. Then, it is determined that the corresponding target UE is the UE 2 according to an adaptation layer subheader, and the data packet is mapped to the Uu RLC channel corresponding to the UE 2. In an example, the CU 1 encapsulates the GTP-U tunnel corresponding to the Uu RLC channel to the UE 2 in the GTP/UDP/IP subheader and sends the data packet to the DU 2. The DU 2 continues to perform RLC layer processing on the data packet. Then, the MAC layer schedules and assembles the data packet into the MAC PDU, and then the data packet is sent to the UE 2 through the physical layer. After the UE 2 receives the data packet, the data packet is processed by the Uu MAC and Uu RLC. Then the adaptation layer subheader in the data packet is detected, and the data packet is mapped to the corresponding SL RB according to source and/or target UE identifier information and/or SL RB ID information. After the PDCP entity of the SL RB corresponding to the UE 2 receives the data packet, the PDCP entity performs decryption and/or integrity protection and/or decompression processing on the data packet. Finally, the data packet is submitted to the SDAP entity of the SL RB for processing and finally submitted to a higher layer. In this manner, local forwarding of the SL data packet by the DU 1, the CU 1, and the DU 2 may be implemented.

### Embodiment five

In this embodiment, in the CU/DU separation scenario, a scenario in which data between UE node pairs served by different CUs is locally forwarded across the DUs or CUs is discussed. FIG. 18 is a diagram of the application scenario of a data transmission method according to embodiment five of the present application. As shown in FIG. 18, the UE 1 and UE 2 are served by the DU 1/CU 1 and the DU 2/CU 2 respectively. It is assumed that there is data transmission between the UE 1 and the UE 2. The DU 1 and the DU 2 may be used to forward the data for the UE 1 and the UE 2, so that the data does not need to pass through the core network, thereby reducing the end-to-end latency.

For example, if the data packet is transmitted through the tunnel between the DU 1 and the DU 2, the configuration and protocol stack of the tunnel between the relevant DUs and the routing and bearer mapping information configured by a CU for a DU may be referred to the preceding embodiment four. In an example, if the data packet is forwarded between the CU 1 and the CU 2, the tunnel configuration and the protocol stack between the CU 1 and the CU 2 may refer to the preceding embodiment two.

### Embodiment six

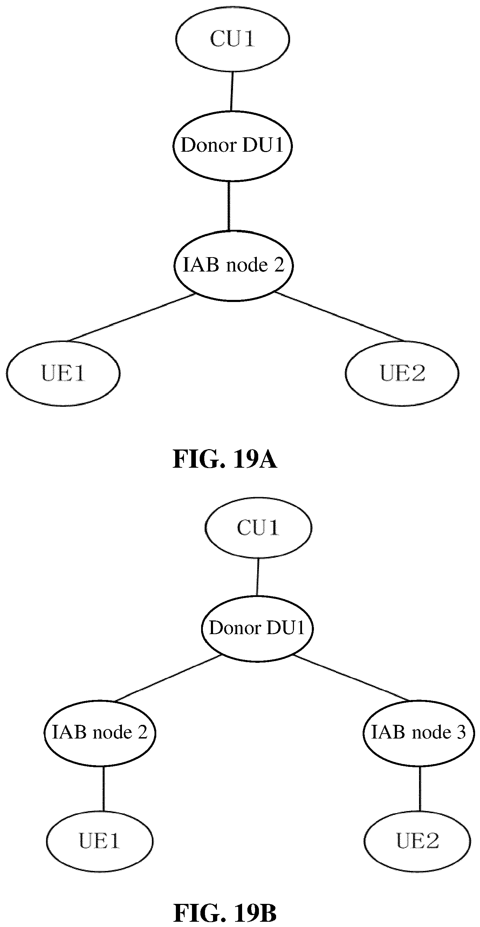

In this embodiment, in an IAB scenario, in a scenario in which the UE 1 and the UE 2 are connected to the same IAB node, or the UE 1 and the UE 2 are connected to different IAB nodes but are served by the same donor distributed unit (DU), a scenario in which data between UE node pairs is locally forwarded is discussed. FIGS. 19A and 19B are diagrams of the application scenarios of a data transmission method according to embodiment six of the present application. This embodiment is divided into two different scenarios. As shown in FIGS. 19A and 19B, in FIG. 19A, the UE 1 and UE 2 are served by an IAB node 2. It is assumed that there is data transmission between the UE 1 and the UE 2. The IAB node 2 may be used to forward the data for the UE 1 and the UE 2, so that the data does not need to pass through the core network, thereby reducing the end-to-end latency. For the implementation, reference may be made to embodiment three. For the scenario shown in FIG. 19B, the UE 1 and UE 2 are served by the IAB node 2 and an IAB node 3 respectively. The IAB node 2 and the IAB node 3 are connected to a donor DU 1 through a radio interface. It is assumed that there is data transmission between the UE 1 and the UE 2. The IAB node 2, the donor DU 1, and the IAB node 3 may be used to forward the data for the UE 1 and the UE 2, so that the data does not need to pass through the core network, thereby reducing the end-to-end latency. In this embodiment, the discussion is focused on the scenario corresponding to FIG. 19 B.

To support the data transmission between the UE 1 and the UE 2, the CU 1 may configure corresponding SL RBs for the UE 1 and/or the UE 2. The data of these SL RBs need to be mapped on the Uu RLC channel between the UE 1/UE 2 and the DU 1 at the Uu interface. The CU also configures the PC5 RRC, PC5 SDAP, and/or PC5 PDCP between the UE 1 and UE 2 for the UE 1 and/or UE 2. The encapsulated SL traffic is transmitted between the UE 1 and the base station or between the base station and the UE 2 through the Uu RLC channel. These Uu RLC channels for transmitting the PC5 data do not need to be associated with the PDU session, do not need to use the NG-U tunnel between the base station and the core network, and do not need to establish the F1-U tunnel for them. The E2E PC5 PDCP between the UE 1 and the UE 2 guarantees the SL traffic security, which means that the data is encrypted and decrypted by using the secret key negotiated between the UE 1 and the UE 2, and the data is not transparent to the base station, thereby further ensuring the security.

Similar to the preceding embodiments, for the mapping of the SL RB (between the UE 1 and the UE 2) and the Uu RLC channel (between the UE 1 and the DU 1 or the UE 2 and the DU 1), 1: 1 mapping or N: 1 mapping may be considered for adoption. For N: 1 mapping, the number of RLC channels at the Uu interface may be reduced. However, an adaptation layer needs to be added to assist with routing and bearer mapping of data packets. To forward the data packet between the IAB node 2, the donor DU 1, and the IAB node 3, the CU 1 needs to configure BH RLC channels for these Uu RLC channels or SL RBs between the IAB node 2 and the donor DU 1, and between the IAB node 3 and the donor DU 1. These BH RLC channels may correspond to a certain SL RB or to one or more Uu RLC channels. In an example, the CU 1 may send BH RLC channel configuration information to the IAB node 2 or the IAB node 3. These BH RLC channel configuration information may include any combination of the following information: one or more associated Uu RLC channel IDs, one or more associated SL RB IDs, a source UE identifier and/or a target UE identifier, QoS profile of the Uu RLC channel or an SL RB or a QoS flow, a priority, and a control signaling type. The control signaling type may be at least one of the following: PC5-S, PC5-RRC, or PC5-D. After the IAB node 2 or the IAB node 3 receives the BH RLC channel configuration establishment/modification/release request sent by the CU 1, a successfully configured BH RLC tunnel list, a BH RLC tunnel list that fails to configure, and/or a failure reason may be sent to the CU 1.

In addition, the CU 1 may send configuration routing selection and bearer mapping information to the IAB node 2 and/or the IAB node 3. For example, the CU 1 may send any combination of the following information to the IAB node 2 and/or the IAB node 3: an SL RB ID, a source UE identifier, a target UE identifier, a BAP routing identifier, and an egress BH RLC channel identifier. The BAP routing identifier includes a BAP address and/or a path identifier.

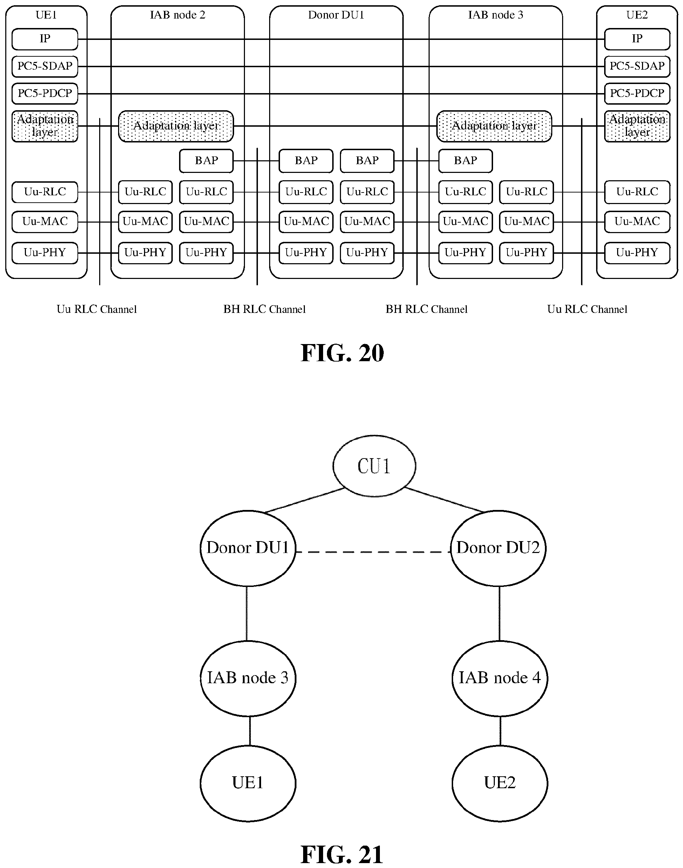

FIG. 20 is a diagram of a user plane protocol stack in which an IAB node 2, a donor DU 1, and an IAB node 3 forward data between UE 1 and UE 2. The data between the UE 1 and the UE 2 uses the SDAP and PDCP protocol layers of the PC5 interface. Optionally, the data packet between the UE 1 and the UE 2 may have an IP layer. When the UE 1 sends the data packet for the UE 2 to the IAB node 2, the UE 1 performs encapsulation and transmission by using the RLC, MAC, and PHY of the Uu interface. Similarly, when the UE 2 receives the data packet from the UE 1 sent by the IAB node 3, the UE 2 uses the PHY, MAC, and RLC of the Uu interface to receive and perform de-encapsulation. There is an adaptation layer between the PC5-PDCP and the Uu-RLC. The adaptation layer may include any combination of the following information: an SL RB ID, a source UE ID, and a target UE ID. After the IAB node 2 receives the data packet from the UE 1, the IAB node 2 encapsulates the data packet in the BAP subheader according to the routing selection and bearer mapping information configured by the CU 1 and maps the data packet to the BH RLC channel between the donor DU 1 and the IAB node 2 for transmission. After the donor DU 1 receives the data packet, the donor DU 1 searches for routing and bearer mapping information according to the BAP subheader, maps the data packet to the BH RLC channel between the donor DU 1 and the IAB node 3, and sends the data packet to the IAB node 3.

### Embodiment seven

In this embodiment, in the IAB scenario, a scenario in which data between UE node pairs served by different donor DUs is locally forwarded across the donor DUs is discussed. FIG. 21 is a diagram of the application scenario of a data transmission method according to embodiment seven of the present application. As shown in FIG. 21, the UE 1 and UE 2 are served by the IAB node 3 and an IAB node 4 respectively. The IAB node 3 and the IAB node 4 are connected to the donor DU 1 and a donor DU 2 respectively. It is assumed that there is data transmission between the UE 1 and the UE 2. The IAB node 3, the donor DU 1, the donor DU 2, and the IAB node 4 may be used to forward the data for the UE 1 and the UE 2, so that the data does not need to pass through the core network, thereby reducing the end-to-end latency.

To support the data transmission between the UE 1 and the UE 2, the CU 1 may configure corresponding SL RBs for the UE 1 and/or the UE 2. The data of these SL RBs need to be mapped on the Uu RLC channel between the UE 1/UE 2 and the IAB node 3/IAB node 4 at the Uu interface. The CU also configures the PC5 RRC, PC5 SDAP, and/or PC5 PDCP between the UE 1 and UE 2 for the UE 1 and/or UE 2. The encapsulated SL traffic is transmitted between the UE 1 and the base station or between the base station and the UE 2 through the Uu RLC channel. These Uu RLC channels for transmitting the PC5 data do not need to be associated with the PDU session, do not need to use the NG-U tunnel between the base station and the core network, and do not need to establish the F1-U tunnel for them. The E2E PC5 PDCP between the UE 1 and the UE 2 guarantees the SL traffic security, which means that the data is encrypted and decrypted by using the secret key negotiated between the UE 1 and the UE 2, and the data is not transparent to the base station, thereby further ensuring the security.

Similar to the preceding embodiments, for the mapping of the SL RB (between the UE 1 and the UE 2) and the Uu RLC channel (between the UE 1 and the DU 1 or the UE 2 and the DU 2), 1: 1 mapping or N: 1 mapping may be considered for adoption. For N: 1 mapping, the number of RLC channels at the Uu interface may be reduced. However, an adaptation layer needs to be added to assist with routing and bearer mapping of data packets. To forward the data packet between the IAB node 2, the donor DU 1, the donor DU 2, and the IAB node 3, the CU 1 needs to configure BH RLC channels for these Uu RLC channels or SL RBs between the IAB node 2 and the donor DU 1, and between the IAB node 4 and the donor DU 2. For the specific configuration method of the BH RLC channels, reference may be made to embodiment six. In addition, to forward the data packet between the donor DU 1 and the donor DU 2, a direct interface between the DUs is also configured between the donor DU 1 and the donor DU 2, and an L-U tunnel is established. For the specific configuration method, reference may be made to embodiment four.

In addition, the CU 1 may send configuration routing selection, routing, and bearer mapping information to the IAB node 3 and/or the IAB node 4 and/or the donor DU 1 and/or the donor DU 2. For example, the CU 1 may send any combination of the following information to the IAB node 3 and/or the IAB node 4: an SL RB ID, a source UE identifier, a target UE identifier, a BAP routing identifier, and an egress BH RLC channel identifier or an L-U tunnel identifier. The BAP routing identifier includes a BAP address and/or a path identifier.

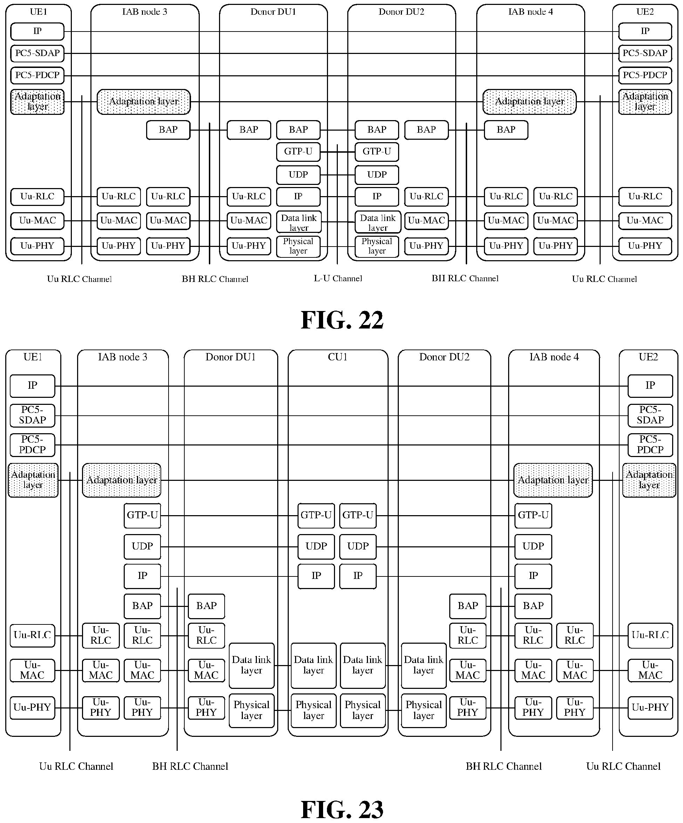

FIG. 22 is a diagram of a user plane protocol stack in which an IAB node 3, a donor DU 1, a donor DU 2, and an IAB node 4 forward data for UE 1 and UE 2. As shown in FIG. 22, the data between the UE 1 and the UE 2 uses the SDAP and PDCP protocol layers of the PC5 interface. In an example, the data packet between the UE 1 and the UE 2 may have an IP layer. When the UE 1 sends the data packet for the UE 2 to the DU 1, the UE 1 performs encapsulation and transmission by using the RLC, MAC, and PHY of the Uu interface. Similarly, when the UE 2 receives the data packet from the UE 1 sent by the DU 1, the UE 2 uses the PHY, MAC, and RLC of the Uu interface to receive and perform de-encapsulation. There is an adaptation layer between the PC5-PDCP and the Uu-RLC. The adaptation layer may include any combination of the following information: an SL RB ID, a source UE ID, and a target UE ID. After the IAB node 3 receives the data packet from the UE 1, the IAB node 3 encapsulates the data packet in the BAP subheader according to the routing selection and bearer mapping information configured by the CU 1. The BAP address included in the BAP subheader is the BAP address of the IAB node 4. Then, the IAB node 3 maps the data packet to the BH RLC channel between the donor DU 1 and the IAB node 3 for transmission. After the donor DU 1 receives the data packet, the donor DU 1 searches for routing and bearer mapping information according to the BAP subheader, maps the data packet to the L-U tunnel between the donor DU 2 and the donor DU 1, encapsulates the data packet in the GTP/UDP/IP subheader, and sends the data packet to the donor DU 2. After the donor DU 2 receives the data packet from the donor DU 1, the donor DU 2 parses the GTP/UDP/IP subheader. Then, the donor DU 2 continues to search for paths and bearer mapping information according to the BAP subheader and maps the data packet to the BH RLC channel between the donor DU 2 and the IAB node 4 for transmission. After the IAB node 4 receives the data packet, the BAP subheader is removed, and the data packet is sent to the UE 2.

In addition, the data packet between the UE 1 and the UE 2 may also be forwarded by the IAB node 3, the donor DU 1, the CU 1, the donor DU 2, and the IAB node 4. FIG. 23 is a diagram of a user plane protocol stack in which an IAB node 3, a donor DU 1, a CU 1, a donor DU 2, and an IAB node 4 forward the data packet between UE 1 and UE 2. As shown in FIG. 18, the data between the UE 1 and the UE 2 uses the SDAP and PDCP protocol layers of the PC5 interface. In an example, the data packet between the UE 1 and the UE 2 may have an IP layer. When the UE 1 sends the data packet for the UE 2 to the DU 1, the UE 1 performs encapsulation and transmission by using the RLC, MAC, and PHY of the Uu interface. Similarly, when the UE 2 receives the data packet from the UE 1 sent by the DU 1, the UE 2 uses the PHY, MAC, and RLC of the Uu interface to receive and perform de-encapsulation. There is an adaptation layer between the PC5-PDCP and the Uu-RLC. The adaptation layer may include any combination of the following information: an SL RB ID, a source UE ID, and a target UE ID. After the IAB node 3 receives the data packet from the UE 1, the IAB node 3 maps the data packet to an F1-U tunnel and encapsulates the data packet in the GTP/UDP/IP subheader according to the information configured by the CU 1. This means that the CU needs to send any combination of the following information to the IAB node 3: a Uu RLC channel ID, an SL RB ID, a source UE identifier, a target UE identifier, and F1-U tunnel information. Then, the IAB node 3 encapsulates the data packet in the BAP subheader according to the routing selection and bearer mapping information configured by the CU. The BAP address included in the BAP subheader is the BAP address of the donor DU 1. Then, the IAB node 3 maps the data packet to the BH RLC channel between the donor DU 1 and the IAB node 3 for transmission. After the donor DU 1 receives the data packet, the BAP subheader is removed, and the data packet is sent to the CU 1. The CU 1 may remap the data packet to the corresponding F1-U tunnel between the CU 1 and the IAB node 4 according to the related information of an adaptation layer subheader and send the data packet to the donor DU 2. The donor DU 2 encapsulates the data packet in the BAP subheader according to the configuration of the CU. The BAP address of the BAP subheader is the BAP address of the IAB node 4. Then, the donor DU 2 maps the data packet to the BH RLC channel and sends the data packet to the IAB node 4. The IAB node 4 removes the BAP subheader and the GTP/UDP/IP subheader and finally sends the data packet to the UE 2 through the Uu RLC channel.

An embodiment of the present application provides UE. The UE includes a receiving module and a configuration module. The receiving module is configured to receive the bearer configuration information sent by the serving node. The configuration module is configured to perform bearer configuration. The UE provided by this embodiment is used to implement the data transmission method of the embodiment shown in FIG. 5.

An embodiment of the present application provides a base station. The base station includes a sending module and a receiving module. The sending module is configured to send the sidelink (SL) data forwarding request to the second base station. The receiving module is configured to receive the SL data forwarding response sent by the second base station. The base station provided by this embodiment is used to implement the data transmission method of the embodiment shown in FIG. 6.

An embodiment of the present application provides a DU. The DU includes a receiving module and a sending module. The receiving module is configured to receive the bearer configuration request information sent by the centralized unit (CU). The sending module is configured to send the bearer configuration response information to the CU. The DU provided by this embodiment is used to implement the data transmission method of the embodiment shown in FIG. 7.

An embodiment of the present application provides a DU. The DU includes a sending module and a receiving module. The sending module is configured to send the data forwarding request to the second DU. The receiving module is configured to receive the data forwarding response sent by the second DU. The DU provided by this embodiment is used to implement the data transmission method of the embodiment shown in FIG. 8.

An embodiment of the present application provides an IAB node. The IAB node includes a receiving module and a sending module. The receiving module is configured to receive the bearer configuration information sent by the centralized unit (CU). The sending module is configured to send the bearer configuration response information to the CU. The IAB node provided by this embodiment is used to implement the data transmission method of the embodiment shown in FIG. 9.

An embodiment of the present application provides a storage medium including computer-executable instructions. When executing the computer-executable instructions, a computer processor is configured to perform a data transmission method. The method includes receiving, by the first UE, the bearer configuration information sent by the serving node; and performing, by the first UE, bearer configuration.

An embodiment of the present application provides a storage medium including computer-executable instructions. When executing the computer-executable instructions, a computer processor is configured to perform a data transmission method. The method includes sending, by the first base station, the SL data forwarding request to the second base station; and receiving, by the first base station, the SL data forwarding response sent by the second base station.

An embodiment of the present application provides a storage medium including computer-executable instructions. When executing the computer-executable instructions, a computer processor is configured to perform a data transmission method. The method includes receiving, by the DU, the bearer configuration request information sent by the CU; and sending, by the DU, the bearer configuration response information to the CU.

An embodiment of the present application provides a storage medium including computer-executable instructions. When executing the computer-executable instructions, a computer processor is configured to perform a data transmission method. The method includes sending, by the first DU, the data forwarding request to the second DU; and receiving, by the first DU, the data forwarding response sent by the second DU.

In general, multiple embodiments of the present application may be implemented in hardware or special-purpose circuits, software, logics, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow in the drawings of the present application may represent program steps, or may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) and an optical memory device and system (a digital video disc (DVD) or a compact disc (CD)). A computer-readable medium may include a non-transitory storage medium. The data processor may be of any type suitable for the local technical environment such as, but not limited to, a general-purpose computer, a special-purpose computer, a microprocessor, a digital signal processor (DSP), an application-specific integrated circuit (ASIC), a field-programmable gate array (FPGA), and a processor based on multi-core processor architecture.

## Claims

1. A data transmission method, comprising:
receiving, by first user equipment, UE, bearer configuration information sent by a serving node; and
performing, by the first UE, bearer configuration.

2. The method according to claim 1, wherein the bearer configuration information comprises at least one of the following:
Uu radio link control, RLC, channel configuration, a Uu RLC channel identifier, Uu logical channel configuration, a source UE identifier, a target UE identifier, a peer UE identifier, service data adaptation protocol, SDAP, configuration corresponding to a sidelink radio bearer, SL RB, packet data convergence protocol, PDCP, configuration corresponding to an SL RB, or mapping information between an SL RB and a Uu RLC channel.

3. The method according to claim 1, wherein the bearer configuration information comprises at least one of the following:
SDAP configuration corresponding to an SL RB, PDCP configuration corresponding to an SL RB, PC5 RLC channel configuration corresponding to an SL RB, PC5 logical channel configuration corresponding to an SL RB, a source UE identifier, a target UE identifier, or a peer UE identifier.

4. The method according to claim 2, wherein the mapping information between the SL RB and the Uu RLC channel comprises at least one of the following:
mapping of at least one of an SL RB identifier, the source UE identifier, or the target UE identifier to the Uu RLC channel identifier or a Uu logical channel identifier, or
mapping of a PC5 quality of service flow identifier, PFI, to the Uu RLC channel identifier or a Uu logical channel identifier.

5. The method according to claim 1, after performing, by the first UE, the bearer configuration, further comprising: sending, by the first UE, data to second UE according to a configured bearer, wherein sending, by the first UE, the data to the second UE according to the configured bearer comprises:
the first UE mapping SL RB data corresponding to the second UE to a Uu interface RLC channel and sending the SL RB data to the serving node; or
the first UE delivering SL RB data corresponding to the second UE to a PC5 RLC channel and sending the SL RB data through a PC5 interface.

6. The method according to claim 1, wherein
SL RB data sent by the first UE to the serving node encapsulates an adaptation layer subheader, and the adaptation layer subheader comprises any combination of the following: a source UE identifier, a target UE identifier, and an SL RB ID; and
at least one of the source UE identifier or the target UE identifier comprised in the adaptation layer subheader comprises any one of the following identifiers: a cell radio network temporary identifier, C-RNTI, a SAE temporary mobile station identifier, S-TMSI, a layer 2 destination identifier, L2 destination ID, a UE identifier assigned by the serving node to UE, or an identifier assigned by a core network to UE.

7. The method according to claim 1, after receiving, by the first UE, the bearer configuration information sent by the serving node, further comprising:
sending, by the first UE, at least one of the following information to the serving node: a request or indication for the serving node forwarding SL data or signaling, a source UE identifier, a target UE identifier, a serving node identifier of source UE, a serving node identifier of target UE, a serving cell identifier of source UE, a serving cell identifier of target UE, a source UE identifier, a target UE identifier, or quality of service, QoS, flow information, wherein
the QoS flow information comprises at least one of the following: a PC5 quality of service flow identifier, PFI, or a QoS parameter.

8. The method according to claim 1 or 5 or 6 or 7, wherein the serving node comprises any combination of the following nodes: a base station, a centralized unit, CU, a distributed unit, DU, an integrated access and backhaul, IAB, node, a distributed unit of an IAB node, IAB node DU, and a donor DU.

9. A data transmission method, comprising:
sending, by a first base station, a sidelink, SL, data forwarding request to a second base station; and
receiving, by the first base station, an SL data forwarding response sent by the second base station.

10. The method according to claim 9, after receiving, by the first base station, the SL data forwarding response sent by the second base station, further comprising:
receiving, by the first base station, SL data sent by first UE and sending the SL data to the second base station through an SL data forwarding tunnel.

11. The method according to claim 9, wherein the SL data forwarding request comprises at least one of the following: an SL sending request, an SL receiving request, SL forwarding user plane transport layer information, quality of service, QoS, information, a sidelink radio bearer identifier, SL RB ID, PC5-S, PC5-RRC, PC5-D, a source UE identifier, a target UE identifier or a target group identifier or a target broadcast identifier, or a unicast or multicast or broadcast indication.

12. The method according to claim 9, wherein the SL data forwarding response comprises at least one of the following: SL forwarding user plane transport layer information, an SL RB ID, an accepted quality of service flow identifier, QFI, PC5-S, PC5-RRC, PC5-D, a source UE identifier, or a target UE identifier or a target group identifier or a target broadcast identifier.

13. The method according to claim 11 or 12, wherein the SL forwarding user plane transport layer information comprises general packet radio service, GPRS, tunneling protocol -tunnel, GTP-Tunnel, information, wherein the GTP-Tunnel information comprises a transport layer address and GTP-tunnel endpoint identifier, TEID, information.

14. The method according to claim 11, wherein the QoS information comprises any combination of the following: a PQI, an RLC mode, a QoS parameter of an SL RB, a QoS flow identifier mapped to an SL RB, and a QoS parameter of a QoS flow.

15. The method according to claim 10, wherein
when the SL data forwarding tunnel corresponds to a specific sidelink radio bearer, an SL RB ID corresponds to a piece of SL forwarding user plane transport layer information in SL forwarding request and response messages; or
when the SL data forwarding tunnel corresponds to specific UE, each of a source UE identifier and a target UE identifier corresponds to a piece of SL forwarding user plane transport layer information in SL forwarding request and response messages; or
when the SL data forwarding tunnel corresponds to a broadcast or multicast, a target group identifier or a target broadcast identifier corresponds to a piece of SL forwarding user plane transport layer information in SL forwarding request and response messages; or
when the SL data forwarding tunnel corresponds to one of non-UE specific GTP-U tunnels corresponding to different types of PC5 signaling, a type of PC5-S or PC5-RRC or PC5-D corresponds to a piece of SL forwarding user plane transport layer information in SL forwarding request and response messages.

16. The method according to claim 9, after receiving, by the first base station, the SL data sent by the first UE, further comprising:
the first base station encapsulating a GTP-U subheader or a user datagram protocol, UDP, subheader or an Internet protocol, IP, subheader into a protocol data unit, PDU, then sending the SL data to the second base station through a data forwarding tunnel.

17. A data transmission method, comprising:
receiving, by a distributed unit, DU, bearer configuration request information sent by a centralized unit, CU; and
sending, by the DU, bearer configuration response information to the CU.

18. The method according to claim 17, wherein the DU sends the bearer configuration response information to the CU, further comprises:
receiving, by the DU, data sent by first UE and forwarding the data to second UE.

19. The method according to claim 17, wherein bearer configuration information comprises at least one of the following: a Uu RLC channel configuration establishment/modification/release request, a Uu radio link control, RLC, channel identifier, a source UE identifier, a target UE identifier, a peer UE identifier, an RLC mode, quality of service, QoS, configuration of a Uu RLC channel, QoS configuration of a sidelink radio bearer, SL RB, mapped to a Uu interface RLC channel, QoS configuration of a QoS flow mapped to a Uu RLC channel, an associated SL RB identifier, a priority, a control signaling type, F1-U tunnel user plane transport layer information, or L-U tunnel configuration information.

20. The method of claim 17, further comprising:
receiving, by the DU, Uu interface RLC channel mapping configuration from the CU, wherein the Uu interface RLC channel mapping configuration comprises any combination of the following: a first UE identifier, a first Uu interface RLC channel identifier, a second UE identifier, and a second Uu interface RLC channel identifier, wherein
the first UE identifier or the second UE identifier comprises at least one of the following: a CU UE F1AP ID, a DU UE F1AP ID, a cell radio network temporary identifier, C-RNTI, an L2 ID, or a UE identifier assigned by the CU.

21. The method according to claim 17, wherein a bearer configuration response sent by the DU to the CU further comprises at least one of the following:
a successfully configured Uu interface RLC channel list, F1-U tunnel user plane transport layer information, at least one of a Uu interface RLC channel list that fails to configure or a failure reason, or L-U tunnel configuration information, wherein
the successfully configured Uu interface RLC channel list comprises configuration of at least one of RLC, a logical channel, or media access control, MAC.

22. The method according to claim 18, wherein sending, by the DU, the data to the second UE comprises:
in response to a data packet not comprising an adaptation layer subheader, determining, by the DU, whether mapping information corresponding to a Uu RLC channel of the first UE exists according to Uu RLC channel information corresponding to the data packet and Uu RLC channel mapping configuration received by the DU from the CU, and in response to existence of the mapping information, mapping and delivering the data packet to a corresponding Uu RLC channel of the second UE; or
in response to a data packet not comprising an adaptation layer subheader, finding, by the DU, an SL RB ID, a source UE identifier, and a target UE identifier corresponding to a Uu RLC channel according to Uu RLC channel information corresponding to the data packet; determining, by the DU, whether the target UE identifier corresponds to UE served by the DU , and in response to determining that the target UE identifier corresponds to the UE served by the DU, searching for, by the DU, a Uu RLC channel corresponding to target UE; and in response to finding that the Uu RLC channel is associated with an SL RB between a same pair of a first UE node and a second UE node, mapping and delivering, by the DU, the data packet to a Uu RLC channel of the second UE; or
in response to a data packet comprising an adaptation layer subheader, detecting, by the DU, the adaptation layer subheader in the data packet; and determining whether a target UE identifier corresponds to UE served by the DU; in response to determining that the target UE identifier does not correspond to the UE served by the DU, sending, by the DU, the data packet to the CU; in response to determining that the target UE identifier corresponds to the UE served by the DU, finding, by the DU, a Uu RLC channel of the second UE according to at least one of SL RB ID information, source UE identifier information, or target UE identifier information comprised in the adaptation layer subheader and bearer mapping information, and delivering the data packet of the data to the Uu RLC channel corresponding to the data packet.

23. The method according to claim 19 or 21, wherein the L-U tunnel configuration information refers to user plane tunnel configuration information between a DU and a DU and comprises at least one of the following:
user plane transport layer information of a user plane tunnel, one or more associated Uu interface radio link control, RLC, channel identifiers, one or more associated sidelink radio bearer identifiers, SL RB IDs, at least one of source UE identifiers or target UE identifiers, quality of service, QoS, configuration of the user plane tunnel or an SL RB or a QoS flow, a priority, or a control signaling type.

24. A data transmission method, comprising:
sending, by a first distributed unit, DU, a data forwarding request to a second DU; and
receiving, by the first DU, a data forwarding response sent by the second DU.

25. The method according to claim 24, wherein the receiving, by the first DU, the data forwarding response sent by the second DU, further comprises:
receiving, by the first DU, data sent by first UE and forwarding the data through an L interface user plane tunnel established between the first DU and the second DU.

26. The method according to claim 25, wherein an L interface established between the first DU and the second DU comprises an interface between a DU and another DU, or an interface between a donor DU and a DU, or an interface between a donor DU and another donor DU.

27. The method according to claim 24, wherein the data forwarding request comprises at least one of the following: cell information of the first DU or tunnel configuration information,
wherein
the cell information of the first DU comprises at least one of the following: an NR cell global identifier, NCGI, of a cell of the first DU, a physical cell identifier, PCI, or a public land mobile network, PLMN; and
the tunnel configuration information comprises at least one of the following: user plane transport layer information of an L interface user plane tunnel, one or more associated Uu interface radio link control, RLC, channel identifiers, at least one of one or more associated sidelink radio bearer identifiers, SL RB IDs, source UE identifiers, or target UE identifiers, QoS configuration of the L interface user plane tunnel or a Uu interface RLC channel or an SL RB or a quality of service, QoS, flow, a priority, or a control signaling type.

28. The method according to claim 24, wherein the data forwarding response comprises cell information of the second DU, the cell information of the second DU comprises an NCGI of a cell of the second DU, a PCI, a PLMN, and tunnel configuration information, and the tunnel configuration information comprises at least one of the following: user plane transport layer information of an L interface user plane tunnel, one or more associated Uu interface radio link control, RLC, channel identifiers, one or more associated sidelink radio bearer identifiers, SL RB IDs, at least one of source UE identifiers or target UE identifiers, quality of service, QoS, configuration of an L interface user plane tunnel or a Uu interface RLC channel or an SL RB or a QoS flow, a priority, or a control signaling type.

29. The method according to claim 24, further comprising: receiving, by the first DU, routing and bearer mapping configuration information sent by a first CU, wherein the configuration routing and the bearer mapping information comprise at least one of the following: an SL RB ID, a source UE identifier, a target UE identifier, next hop information, or egress tunnel information;
the next hop information comprises at least one of the following: an identifier of a CU, an identifier of a DU, or a UE identifier;
the egress tunnel information comprises at least one of the following:
at least one of an identifier of a CU or F1 interface user plane tunnel information,
at least one of an identifier of a DU or L interface user plane tunnel information, or
at least one of a UE identifier or Uu interface RLC channel information.

30. The method according to claim 24, before sending, by the first DU, the data forwarding request to the second DU, further comprising:
receiving, by the first DU, IP address information of the second DU sent by a first CU.

31. The method according to claim 25, wherein receiving, by the first DU, the data sent by the first UE and forwarding the data through the L interface user plane tunnel established between the first DU and the second DU comprise:
after receiving, by the first DU, the data, checking SL RB ID information associated with a Uu RLC channel comprised in an adaptation layer, source UE identifier information, and target UE identifier information, and routing and bearer mapping information configured by a CU; finding bearer information and a node corresponding to a next hop, and in response to the next hop corresponding to the data being an identifier of the second DU, mapping, by the first DU, a data packet to the L interface user plane tunnel corresponding to the first DU and the second DU and sending the data packet to the second DU.

32. A data transmission method, comprising:
receiving, by a first integrated access and backhaul, IAB, node, bearer configuration information sent by a centralized unit, CU; and
sending, by the first IAB node, bearer configuration response information to the CU.

33. The method according to claim 32, after performing, by the first IAB node, bearer configuration, further comprising:
receiving, by the first IAB node, data sent by first UE and forwarding the data through a configured bearer.

34. The method according to claim 32, wherein sending, by the first IAB node, the bearer configuration response information to the CU comprises:
sending, by the IAB node, at least one of a successfully configured backhaul, BH, RLC tunnel list, a BH RLC tunnel list that fails to configure, or a failure reason to the CU.

35. The method according to claim 32, wherein the bearer configuration information comprises at least one of the following: one or more associated Uu interface radio link control, RLC, channel identifiers, one or more associated sidelink radio bearer identifiers, SL RB IDs, at least one of source UE identifiers or target UE identifiers, quality of service, QoS, configuration of a Uu interface RLC channel or an SL RB or a QoS flow, a priority, or a control signaling type.

36. The method according to claim 32, wherein the bearer configuration information further comprises routing selection and bearer mapping configuration information, and the routing selection and bearer mapping configuration information comprises at least one of the following:
an SL RB ID, a source UE identifier, a target UE identifier, a backhaul adaptation protocol, BAP, routing identifier, an egress BH RLC channel identifier, or user plane tunnel information between DUs, wherein
the BAP routing identifier comprises at least one of the following: a BAP address or a path identifier.

37. The method according to claim 33, after receiving, by the first IAB node, the data sent by the first UE, further comprising:
in response to determining, by the first IAB node, that a next hop is a parent node according to configured routing selection and bearer mapping information, encapsulating, by the first IAB node, a BAP subheader for the data sent by the first UE, and then mapping, by the first IAB node, the data to a BH RLC channel between the first IAB node and the parent node for transmission; or
in response to the first IAB node being a first donor DU, determining, by the first donor DU, that a next hop is a second donor DU according to routing and bearer mapping information, and mapping, by the first donor DU, the data to a user plane tunnel between the first donor DU and the second donor DU and sending the data to the second donor DU; or
in response to the first IAB node being a first donor DU, determining, by the first donor DU, that a target BAP address in a BAP subheader corresponding to a donor DU and that target UE comprised in an adaptation layer subheader of the data is not served by the first donor DU according to the BAP subheader of the data, and sending, by the first donor DU, the data to the CU.

38. A user equipment, UE, comprising:
a receiving module configured to receive bearer configuration information sent by a serving node; and
a configuration module configured to perform bearer configuration.

39. A base station, comprising:
a sending module configured to send a sidelink, SL, data forwarding request to a second base station; and
a receiving module configured to receive an SL data forwarding response sent by the second base station.

40. A distributed unit, DU, comprising:
a receiving module configured to receive bearer configuration request information sent by a centralized unit, CU; and
a sending module configured to send bearer configuration response information to the CU.

41. A distributed unit, DU, comprising:
a sending module configured to send a data forwarding request to a second DU; and
a receiving module configured to receive a data forwarding response sent by the second DU.

42. An integrated access and backhaul, IAB, node, comprising:
a receiving module configured to receive bearer configuration information sent by a centralized unit, CU; and
a sending module configured to send bearer configuration response information to the CU.

43. A computer-readable storage medium, configured to store computer-executable instructions, wherein the computer-executable instructions are configured to execute the data transmission method according to any one of claims 1 to 37.
